# EUROPEAN PATENT APPLICATION

(11) **EP 4 280 727 A1**
(43) Date of publication of application: **22.11.2023**
(21) Application number: 21919315.8
(22) Date of filing: 13.01.2021
(51) Int. Cl.: H04W 72/02, H04W 92/18

(54) **TERMINAL AND TRANSMISSION METHOD**

(71) Applicant: NTT DOCOMO, INC., Tokyo 100-6150 (JP)
(72) Inventor: YOSHIOKA, Shohei, Tokyo 100-6150 (JP); NAGATA, Satoshi, Tokyo 100-6150 (JP)
(74) Representative: Hoffmann Eitle
(86) International application number: PCT/JP2021/000933
(87) International publication number: WO 2022/153421

(57) **Abstract**

A terminal including: a reception unit configured to receive resource allocation information of a sidelink transmission from a base station; a control unit configured to determine whether to perform the sidelink transmission using an autonomously selected resource, based on the resource allocation information; and a transmission unit configured to perform the sidelink transmission in a case where the sidelink transmission is determined to be performed.

## Description

### [FIELD OF THE INVENTION]

The present invention relates to a terminal and a base station in a wireless communication system.

### [BACKGROUND OF THE INVENTION]

In LTE (Long Term Evolution) and LTE successor systems (e.g., LTE-A (LTE Advanced), NR (New Radio) (also referred to as 5G)), a D2D technology in which terminals communicate directly with each other without using a base station has been introduced.

The D2D reduces traffic between the terminals and the base stations and enables communication between the terminals even when the base stations are unable to communicate during a disaster, etc. Note that, because the D2D is referred to as sidelink in 3GPP (3rd Generation Partnership Project), basically, the term "sidelink" is used herein.

The sidelink communication is broadly classified into: discovery for discovering other terminals capable of communication; and communication for direct communication between terminals (also referred to as D2D direct communication, direct communication between terminals, or the like). Hereinafter, when communication and discovery are not specifically distinguished, it is simply called sidelink. Various use cases of services related to V2X (Vehicle to Everything) in NR are being discussed.

### [Citation List]

### [Non-Patent Document]

[Non-Patent Document 1] 3GPP TS 38.331 V16.1.0 (2020-07)
[Non-Patent Document 2] 3GPP TS 38.214 V16.2.0 (2020-06)
[Non-Patent Document 3] 3GPP TS 38.321 V16.1.0 (2020-07)

### SUMMARY OF THE INVENTION

### [TECHNICAL PROBLEM]

In the sidelink services, it is assumed that there exist: a terminal that performs sidelink transmission using a resource allocated by a base station; and a terminal that autonomously selects a resource to perform sidelink transmission, in the same area.

In a mode in which resources for sidelink transmission are allocated from a base station to a terminal, an uncontrollable sidelink transmission may occur in an environment in which there exists a terminal that autonomously selects a resource to perform sidelink transmission as described above. Therefore, a collision of sidelink transmissions may occur between terminals.

The present invention has been made in view of the above, and it is an object of the present invention to provide a technology that makes it possible to avoid a collision of sidelink transmissions between: a terminal that performs sidelink transmission using a resource allocated by a base station; and a terminal that autonomously selects a resource to perform sidelink transmission.

### [SOLUTION TO PROBLEM]

According to the disclosed technology, there is provided a terminal including: a reception unit configured to receive resource allocation information of a sidelink transmission from a base station;
a control unit configured to determine whether to perform the sidelink transmission using an autonomously selected resource, based on the resource allocation information; and
a transmission unit configured to perform the sidelink transmission in a case where the sidelink transmission is determined to be performed.

### [ADVANTAGEOUS EFFECTS OF INVENTION]

According to the disclosed technology, a technique is provided that makes it possible to avoid a collision of sidelink transmissions between: a terminal that performs sidelink transmission using a resource allocated by a base station; and a terminal that autonomously selects a resource to perform sidelink transmission.

### BRIEF DESCRIPTION OF THE DRAWINGS

[Fig. 1] Fig. 1 is a drawing illustrating V2X.
[Fig. 2] Fig. 2 is a drawing illustrating an example (1) of a V2X transmission mode.
[Fig. 3] Fig. 3 is a drawing illustrating an example (2) of a V2X transmission mode.
[Fig. 4] Fig. 4 is a drawing illustrating an example (3) of a V2X transmission mode.
[Fig. 5] Fig. 5 is a drawing illustrating an example (4) of a V2X transmission mode.
[Fig. 6] Fig. 6 is a drawing illustrating an example (5) of a V2X transmission mode.
[Fig. 7] Fig. 7 is a drawing illustrating an example (1) of a V2X communication type.
[Fig. 8] Fig. 8 is a drawing illustrating an example (2) of a V2X communication type.
[Fig. 9] Fig. 9 is a drawing illustrating an example (3) of a V2X communication type.
[Fig. 10] Fig. 10 is a sequence diagram illustrating an example (1) of V2X operation.
[Fig. 11] Fig. 11 is a sequence diagram illustrating an example (2) of V2X operation.
[Fig. 12] Fig. 12 is a sequence diagram illustrating an example (3) of V2X operation.
[Fig. 13] Fig. 13 is a sequence diagram illustrating an example (4) of V2X operation.
[Fig. 14] Fig. 14 is a drawing illustrating an example of a sensing operation.
[Fig. 15] Fig. 15 is a drawing illustrating an example of a partial sensing operation.
[Fig. 16] Fig. 16 is a flowchart illustrating an example of reevaluation.
[Fig. 17] Fig. 17 is a drawing illustrating an example of reevaluation.
[Fig. 18] Fig. 18 is a flowchart illustrating an example of preemption.
[Fig. 19] Fig. 19 is a drawing illustrating mode 1.
[Fig. 20] Fig. 20 is a drawing illustrating mode 1.
[Fig. 21] Fig. 21 is a drawing illustrating mode 1.
[Fig. 22] Fig. 22 is a drawing illustrating embodiment 1.
[Fig. 23] Fig. 23 is a drawing illustrating embodiment 1.
[Fig. 24] Fig. 24 is a drawing illustrating embodiment 2.
[Fig. 25] Fig. 25 is a drawing illustrating embodiment 2.
[Fig. 26] Fig. 26 is a drawing illustrating embodiment 3.
[Fig. 27] Fig. 27 is a drawing illustrating embodiment 3.
[Fig. 28] Fig. 28 is a drawing illustrating embodiment 3.
[Fig. 29] Fig. 29 is a drawing illustrating embodiment 3.
[Fig. 30] Fig. 30 is a drawing illustrating embodiment 4.
[Fig. 31] Fig. 31 is a drawing illustrating embodiment 4.
[Fig. 32] Fig. 32 is a drawing illustrating an example of a functional structure of a base station 10 in an embodiment of the present invention.
[Fig. 33] Fig. 33 is a drawing illustrating an example of a functional structure of a terminal 20 in an embodiment of the present invention.
[Fig. 34] Fig. 34 is a drawing illustrating an example of a hardware structure of the base station 10 or the terminal 20 in an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used appropriately. Note that the conventional technologies are, for example, a conventional NR (for example, the conventional techniques that are disclosed in Non-Patent Documents 1 to 3) or a conventional LTE. However, the conventional technologies are not limited to the conventional NR or conventional LTE. Further, it is assumed that the term "LTE" used in the present specification has, unless otherwise specifically mentioned, a broad meaning including a scheme of LTE-Advanced and a scheme after LTE-Advanced (e.g., NR), or wireless LAN (Local Area Network).

Furthermore, in an embodiment of the present invention, the duplex scheme may be TDD (Time Division Duplex) scheme, FDD (Frequency Division Duplex) scheme, or other schemes (e.g., Flexible Duplex, or the like).

Further, in an embodiment of the present invention, the expression, a radio (wireless) parameter is "configured" may mean that a predetermined value is pre-configured, or may mean that a radio parameter indicated by the base station 10 or the terminal 20 is configured.

In the following description, operations of an upper layer (e.g., MAC layer) and a lower layer (e.g., PHY layer) in the terminal is described as an example. Note that the functional division between the upper layer and the lower layer is an example, and the operations described below may be performed without distinguishing between the upper layer and the lower layer.

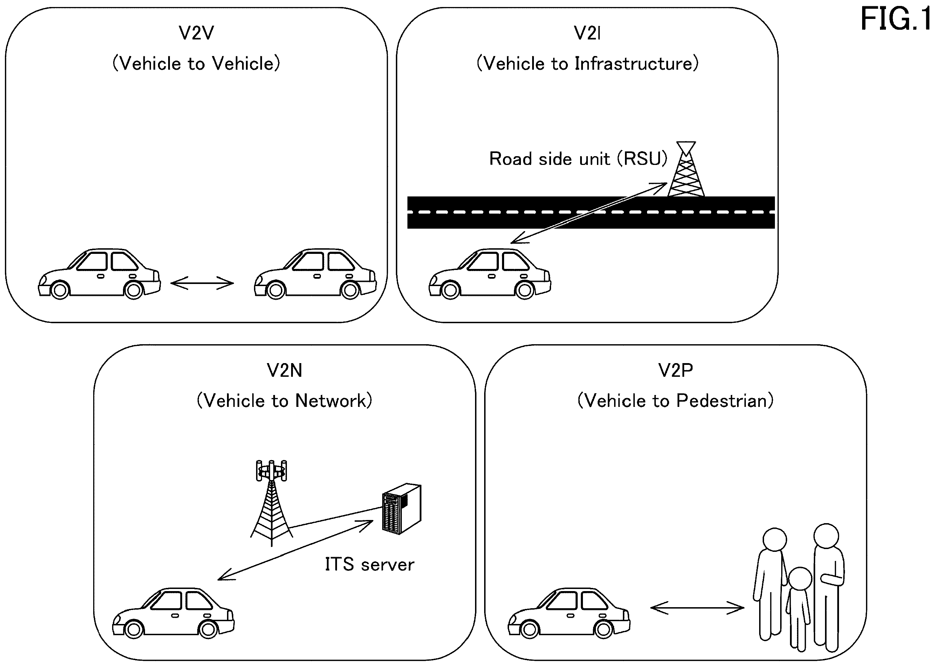

Fig. 1 is a drawing illustrating V2X. In 3GPP, enhancing D2D functions to realize V2X (Vehicle to Everything) or eV2X (enhanced V2X) has been discussed and specifications are being developed. As illustrated in Fig. 1, V2X is a part of ITS (Intelligent Transport Systems) and is a generic name (collective name) for: V2V (Vehicle to Vehicle) referring to a form of communication performed between vehicles; V2I (Vehicle to Infrastructure) referring to a form of communication performed between a vehicle and a road-side unit (RSU) that is installed on roadside; V2N (Vehicle to Network) referring to a form of communication performed between a vehicle and an ITS server; and V2P (Vehicle to Pedestrian) referring to a form of communication performed between a vehicle and a mobile terminal that is carried by a pedestrian.

Further, in 3GPP, V2X using LTE/NR's cellular communication and communication between terminals has been discussed. V2X using cellular communication may be referred to as cellular V2X. In NR V2X, discussions have been performed to realize higher system capacity, reduced latency, higher reliability, and QoS (Quality of Service) control.

With respect to LTE V2X or NR V2X, it is assumed that discussions may be not limited to 3GPP specifications in the future. For example, it is assumed to be discussed on: how to secure interoperability; how to reduce cost by implementing upper layers; how to use or how to switch multiple RATs (Radio Access Technologies); how to handle regulations of each country; how to obtain and distribute data of LTE V2X or NR V2X platform; and how to manage and use databases.

In an embodiment of the present invention, a form of embodiment is mainly assumed in which communication devices (also referred to as terminals) are mounted on vehicles. However, an embodiment of the present invention is not limited to such a form. For example, communication apparatuses may be terminals held by people, may be apparatuses mounted on drones or aircrafts, or may be base stations, RSUs, relay stations (relay nodes), terminal capable of scheduling, etc. Here, the vehicle on which the communication device is mounted may also be referred to as a terminal.

It should be noted that SL (Sidelink) may be distinguished from UL (Uplink) or DL (Downlink), based on one of, or a combination of the following 1) through 4). Furthermore, SL may be referred to as a different name.
1) Resource arrangement in the time domain
2) Resource arrangement in the frequency domain
3) Synchronization signal to be referred to (including SLSS (Sidelink Synchronization Signal))
4) Reference signal that is used for pass loss measurement used for transmission power control

Further, with respect to OFDM (Orthogonal Frequency Division Multiplexing) of SL or UL, any of CP-OFDM (Cyclic-Prefix OFDM), DFT-S-OFDM (Discrete Fourier Transform-Spread-OFDM), OFDM without Transform precoding, and OFDM with Transform precoding may be applied.

In LTE SL, with respect to allocating SL resources to terminal 20, Mode 3 and Mode 4 are defined. In Mode 3, transmission resources are dynamically allocated using a DCI (Downlink Control Information) that is transmitted from a base station 10 to a terminal 20. Further, in Mode 3, SPS (Semi Persistent Scheduling) is available. In Mode 4, the terminal 20 autonomously selects transmission resources from a resource pool.

In NR SL, with respect to allocating SL resources to the terminal 20, Mode 1 and Mode 2 are defined. In Mode 1, transmission resources are allocated by a DCI that is transmitted from the base station 10 to the terminal 20. In Mode 2, the terminal 20 autonomously selects transmission resources from a resource pool.

It should be noted that a slot in an embodiment of the present invention may be read on (replaced with) a symbol, a mini slot, a subframe, a radio frame, or a TTI (Transmission Time Interval). Further, a cell in an embodiment of the present invention may be read on a cell group, a carrier component, a BWP (bandwidth part), a resource pool, a resource, a RAT (Radio Access Technology), a system (including a wireless LAN), etc.

Note that, in an embodiment of the present invention, the terminal 20 is not limited to a V2X terminal, but may be any type of terminal that performs D2D communication. For example, the terminal 20 may be a terminal carried by a user, such as a smartphone, or an IoT (Internet of Things) device, such as a smart meter. Further, the terminal may also be referred to as "UE".

### (Basic configuration example and basic operation example of system)

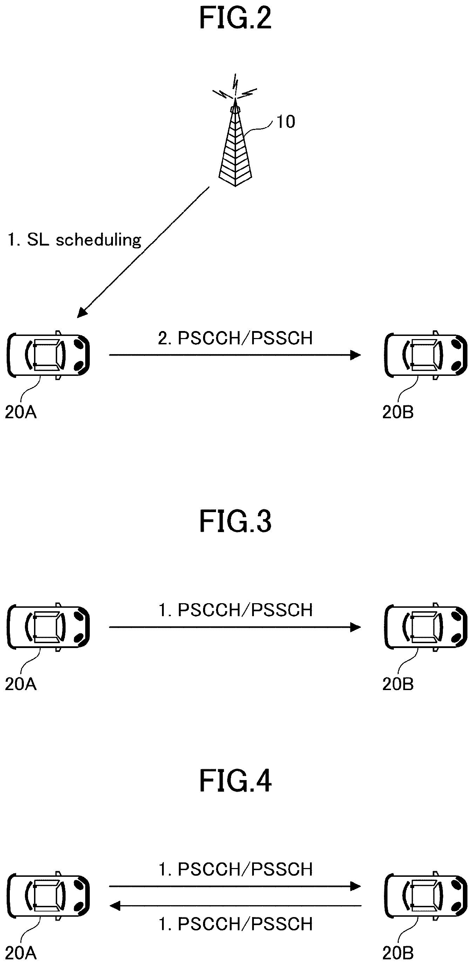

Figs. 2 to 13 used in the following description, illustrate an example of system configuration in an embodiment of the present invention, and also illustrate an example of a basic operation in a system related to an embodiment of the present invention.

As shown in Fig. 2, the wireless communication system related to an embodiment of the present invention includes a terminal 20A. a terminal 20B, and a base station 10. Note that there are many terminals in the real world, but Fig. 2 shows the terminal 20A and the terminal 20B as examples.

Hereinafter, in a case where the terminals 20A, 20B, or the like are not particularly distinguished, the term "terminal 20" or "UE" will be used. Fig. 2 illustrates, for example, a case where the terminal 20A and the terminal 20B are both within a coverage of a cell. However, the operation in an embodiment of the present invention embodiment can be applied to a case where the terminal 20 is outside the coverage.

Note that the terminal 20 need not be a single housing device. For example, even when various sensors are arranged and distributed in a vehicle, a device including the various sensors is may be a terminal 20.

Further, processing contents of sidelink transmission data of the terminal 20 are basically the same as those of UL transmission in LTE or NR. For example, the terminal 20 may scramble a codeword of the transmission data, may modulate to generate complex-valued symbols, may map the complex-valued symbols to one or two layers, and may perform precoding. Further, the precoded complex-valued symbols are mapped to a resource element to generate a transmission signal (e.g., complex-valued time-domain SC-FDMA signal) and, and the generated signal is transmitted from each antenna port.

Regarding the base station 10, the base station 10 has a function of cellular communication as a base station in LTE or NR and a function of enabling communication of the terminal 20 according to an embodiment of the present invention (e.g., resource pool configuration, resource allocation, etc.). Further, the base station 10 may also be an RSU (gNB-type RSU). The base station 10 is a communication apparatus that provides one or more cells and performs wireless communications with the terminal 20. Physical resources of the radio signal may be defined in the time domain and the frequency domain, the time domain may be defined by the number of OFDM symbols, and the frequency domain may be defined by the number of sub-carriers or resource blocks. Further, a TTI (Transmission Time Interval) in the time domain may be a slot, the TTI may be a subframe, or may be a symbol.

Further, in the wireless communication system according to an embodiment of the present invention, a signal waveform used by the terminal 20 for SL or UL may be OFDMA, SC-FDMA, or other signal waveforms.

In an example illustrated in Fig. 2, the transmission-side terminal 20A may be referred to as TX-UE, and the reception-side terminal 20B may be referred to as RX-UE.

Fig. 2 is a drawing illustrating an example (1) of a V2X transmission mode. In the transmission mode of sidelink communication illustrated in Fig. 2, in step 1, a base station 10 transmits sidelink scheduling information to a terminal 20A. Subsequently, based on the received scheduling information, the terminal 20A transmits control information via PSCCH (Physical Sidelink Control Channel) and transmits data (which may be control information) via PSSCH (Physical Sidelink Shared Channel) to the terminal 20B (step 2). Note that "transmitting control information via PSCCH" may be described as "transmitting PSCCH", and transmitting data (which may be control information) via PSSCH may be described as transmitting PSSCH.

The transmission mode of sidelink communication illustrated in Fig. 2 may be referred to as a sidelink transmission mode 3 in LTE. In the sidelink transmission mode 3 in LTE, Uu based sidelink scheduling is performed. Uu is a radio interface between UTRAN (Universal Terrestrial Radio Access Network) and UE (User equipment). Further, the transmission mode of sidelink communication illustrated in Fig. 2 may be referred to as a sidelink transmission mode 1 in NR.

Fig. 3 is a drawing illustrating an example (2) of a V2X transmission mode. In a transmission mode of sidelink communication illustrated in Fig. 3, in step 1, a terminal 20A transmits PSCCH and PSSCH to a terminal 20B using autonomously selected resources. The transmission mode of sidelink communication illustrated in Fig. 3 may be referred to as a sidelink transmission mode 4 in LTE. In the sidelink transmission mode 4 in LTE, the terminal 20A itself performs resource selection. The transmission mode of sidelink communication illustrated in Fig. 3 may be referred to as a sidelink transmission mode 2 in NR. In the sidelink transmission mode 2 in NR, the terminal 20A itself performs resource selection.

Fig. 4 is a drawing illustrating an example (3) of a V2X transmission mode. In a transmission mode of sidelink communication illustrated in Fig. 4, in step 1, a terminal 20A transmits PSCCH and PSSCH to a terminal 20B using autonomously selected resources. Similarly, the terminal 20B transmits PSCCH and PSSCH to the terminal 20A using autonomously selected resources (step 1) The transmission mode of sidelink communication illustrated in Fig. 4 may be referred to as a sidelink transmission mode 2 or transmission mode 2a in NR. In the sidelink transmission mode 2 in NR, the terminal 20 itself performs resource selection.

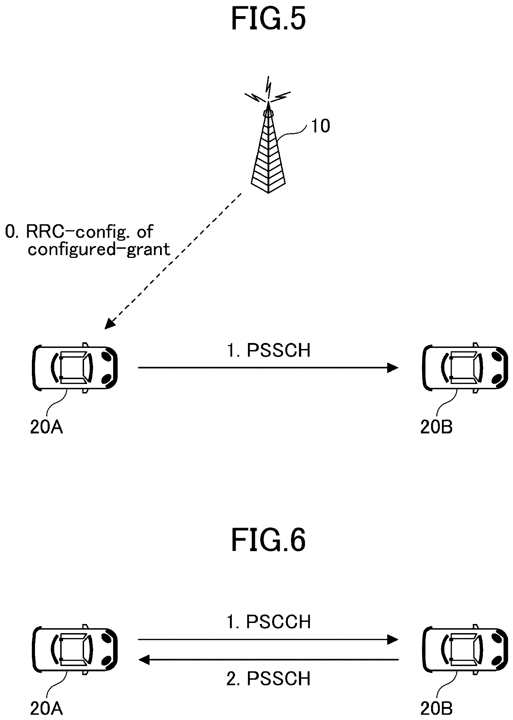

Fig. 5 is a drawing illustrating an example (4) of a V2X transmission mode. In the transmission mode of sidelink communication illustrated in Fig. 5, in step 0, the base station 10 transmits a sidelink resource pattern to the terminal 20A via RRC (Radio Resource Control) configuration. Alternatively, the sidelink resource pattern may be pre-configured to the terminal 20A. Subsequently, the terminal 20A transmits PSSCH to the terminal 20B, based on the received or pre-configured resource pattern (step 1). The transmission mode of sidelink communication illustrated in Fig. 5 may be referred to as a sidelink transmission mode 2c in NR.

Fig. 6 is a drawing illustrating an example (5) of a V2X transmission mode. In the transmission mode of sidelink communication illustrated in Fig. 6, in step 1, the terminal 20A transmits sidelink scheduling information to the terminal 20B via PSCCH. Subsequently, the terminal 20B transmits PSSCH to the terminal 20A, based on the received scheduling information (step 2). The transmission mode of sidelink communication illustrated in Fig. 6 may be referred to as a sidelink transmission mode 2d in NR.

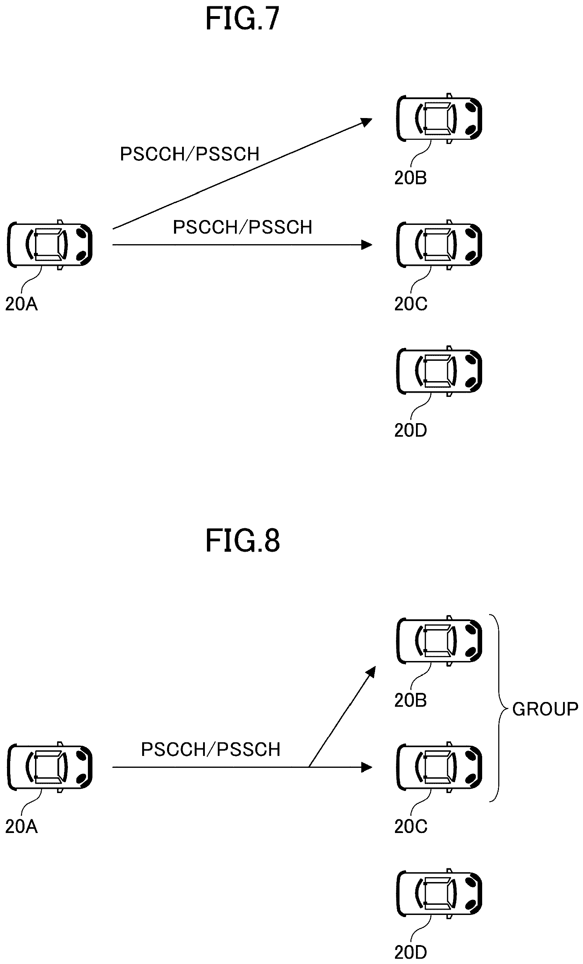

Fig. 7 is a drawing illustrating an example (1) of a V2X communication type. The sidelink communication type illustrated in Fig. 7 is uni-cast. The terminal 20A transmits PSCCH and PSSCH to terminal 20. In an example illustrated in Fig. 7, the terminal 20A performs uni-cast to the terminal 20B, and performs uni-cast to the terminal 20C.

Fig. 8 is a drawing illustrating an example (2) of a V2X communication type. The sidelink communication type illustrated in Fig. 8 is group-cast. The terminal 20A transmits PSCCH and PSSCH to a group to which one or more terminals 20 belong. In an example illustrated in Fig. 8, the group includes a terminal 20B and a terminal 20C, and the terminal 20A performs groupcast to the group.

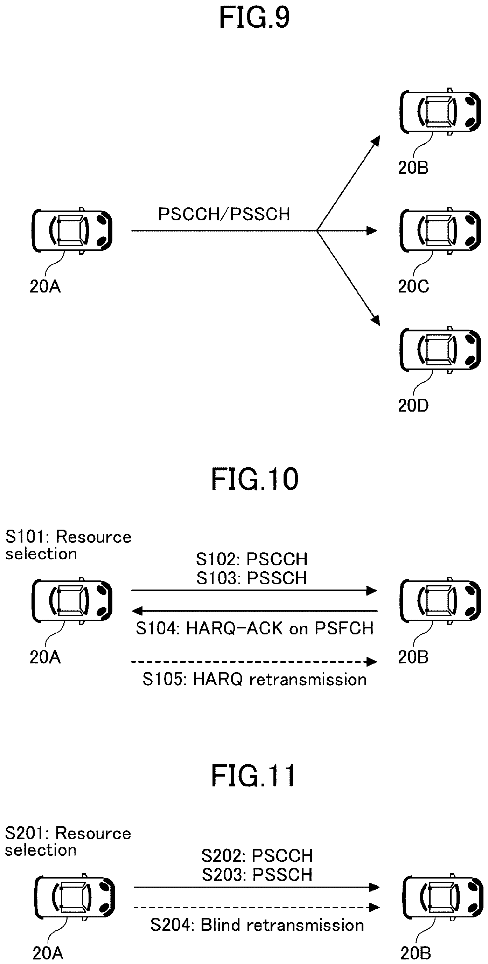

Fig. 9 is a drawing illustrating an example (3) of a V2X communication type. The sidelink communication type illustrated in Fig. 9 is broad-cast. The terminal 20A transmits PSCCH and PSSCH to one or more terminals 20. In an example illustrated in Fig. 9, the terminal 20A performs broadcast to the terminal 20B, the terminal 20C, and the terminal 20D. Note that the terminal 20A shown in Figs. 7 to 9 may be referred to as a header UE (header-UE).

In addition, in NR-V2X, HARQ (Hybrid automatic repeat request) is supported for unicast and groupcast of sidelink. In addition, in NR-V2X, SFCI (Sidelink Feedback Control Information) containing a HARQ response is defined. SFCI is transmitted via PSFCH (Physical Sidelink Feedback Channel).

Note that, in the following description, it is assumed that PSFCH is used in the transmission of HARQ-ACK on sidelink. However, this just an example. For example, PSCCH may be used to transmit HARQ-ACK on sidelink, PSSCH may be used to transmit HARQ-ACK on sidelink, or other channels may be used to transmit HARQ-ACK on sidelink.

Hereinafter, for the sake of convenience, the overall information reported by the terminal 20 in the HARQ is referred to as HARQ-ACK. This HARQ-ACK may also be referred to as HARQ-ACK information. Further, more specifically, a codebook applied to the HARQ-ACK information reported from the terminal 20 to the base station 10 or the like is called a HARQ-ACK codebook. The HARQ-ACK codebook defines a bit string (sequence) of the HARQ-ACK information. Note that "HARQ-ACK" sends not only ACK but also NACK.

Fig. 10 is a sequence diagram illustrating an example (1) of V2X HARQ-ACK related operation.

In step S101, the terminal 20A autonomously selects a resource to be used for PSCCH and PSSCH from a resource selection window having a predetermined period. The resource selection window may be configured to the terminal 20 by the base station 10. Note that, in the resource selection, a resource identifying process for determining a set of candidates, and a resource selecting process for selecting a resource from the set are performed.

In step S102 and step S103, the terminal 20A transmits, using the resource autonomously selected in step S101, SCI (Sidelink Control Information) via PSCCH (or PSSCH) and transmits SL data via PSSCH. For example, the terminal 20A may transmit the PSCCH using a frequency resource adjacent to the PSSCH frequency resource with the same time resource as at least a portion of the time resource of the PSSCH.

The terminal 20B receives the SCI (PSCCH or PSSCH) and the SL data (PSSCH) transmitted from the terminal 20A. The received SCI may include information of a PSFCH resource for the terminal 20B to send HARQ-ACK for reception of the data. The terminal 20A may include information of the autonomously selected information (resource reservation information) in the SCI, and then perform the transmission.

In step S104, the terminal 20B transmits a HARQ-ACK for the received data to the terminal 20A using the PSFCH resource specified by the received SCI.

In step S105, when the HARQ-ACK received in step S104 indicates a request for retransmission, that is, when the HARQ-ACK is a NACK (negative response), the terminal 20A retransmits the PSCCH and the PSSCH to the terminal 20B. The terminal 20A may retransmit the PSCCH and the PSSCH using an autonomously selected resource.

Note that in a case where HARQ feedback control is not performed, step S104 and step S105 need not be performed.

Fig. 11 is a sequence diagram illustrating an example (2) of V2X HARQ-ACK related operation. A blind retransmission without HARQ feedback control for improving the transmission success rate or reachable distance, may be performed.

In step S201, the terminal 20A autonomously selects a resource to be used for PSCCH and PSSCH from a resource selection window having a predetermined period. The resource selection window may be configured to the terminal 20 by the base station 10.

In step S202 and step S203, the terminal 20A transmits, using the resource autonomously selected in step S201, SCI via PSCCH (or PSSCH), and transmits SL data via PSSCH. For example, the terminal 20A may transmit the PSCCH using a frequency resource adjacent to the PSSCH frequency resource with the same time resource as at least a portion of the time resource of the PSSCH.

In step S204, the terminal 20A retransmits, using the resource autonomously selected in step S201, the SCI via PSCCH or PSSCH and the SL data via PSSCH to the terminal 20B. The retransmission in step S204 may be performed multiple times.

It is noted that, if the blind retransmission is not performed, step S204 may not be performed.

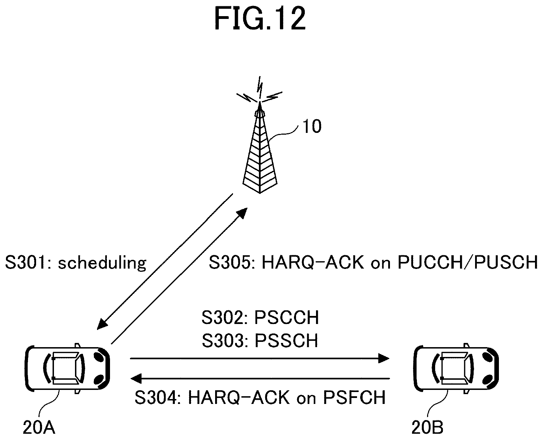

Fig. 12 is a sequence diagram illustrating an example (3) of V2X HARQ-ACK related operation. The base station 10 may perform scheduling of the sidelink. That is, the base station 10 may determine a sidelink resource to be used by the terminal 20 and transmit information indicating the resource to the terminal 20. In addition, in a case where HARQ control is applied, the base station 10 may transmit information indicating a PSFCH resource to the terminal 20.

In step S301, the base station 10 performs SL scheduling by transmitting DCI (Downlink Control Information) via PDCCH to the terminal 20A. For the sake of convenience, the DCI for SL scheduling is called an SL scheduling DCI.

Further, in step S301, the base station 10 may transmit DCI for DL scheduling (which may be referred to as DL allocation) via PDCCH to the terminal 20A. For the sake of convenience, the DCI for DL scheduling is called a DL scheduling DCI. The terminal 20A, which has received the DL scheduling DCI, receives DL data via PDSCH using a resource specified by the DL scheduling DCI.

In step S302 and step S303, the terminal 20A transmits, using the resource specified by the SL scheduling DCI, SCI (Sidelink Control Information) via PSCCH (or PSSCH) and transmits SL data via PSSCH. Note that, in the SL scheduling DCI, only a PSSCH resource may be specified. In this case, For example, the terminal 20A may transmit the PSCCH using a frequency resource adjacent to the PSSCH frequency resource with the same time resource as at least a portion of the time resource of the PSSCH.

The terminal 20B receives the SCI and the SL data (PSSCH) transmitted from the terminal 20A. The SCI received via the PSCCH or PSSCH includes information of a PSFCH resource for the terminal 20B to transmit HARQ-ACK in response to the data reception.

The resource information may be included in the DL scheduling DCI or SL scheduling DCI transmitted from the base station 10 in S301, and the terminal 20A may acquire the resource information from the DL scheduling DCI or the SL scheduling DCI and may include the acquired resource information in the SCI. Alternatively, the DCI transmitted from the base station 10 may not include the information of the resource, and the terminal 20A may autonomously include the information of the resource in the SCI and transmit the SCI including the information.

In step S304, the terminal 20B transmits a HARQ-ACK for the received data to the terminal 20A using the PSFCH resource specified by the received SCI.

In step S305, the terminal 20A transmits HARQ-ACK by using, for example, a PUCCH (Physical uplink control channel) resource specified by the DL scheduling DCI (or SL scheduling DCI) at the timing (e.g., the timing in slot units) specified by the DL scheduling DCI (or SL scheduling DCI), and the base station 10 receives the HARQ-ACK.

Note that, in a case where HARQ feedback control is not performed, at least one of step S304 and step S305 need not be performed.

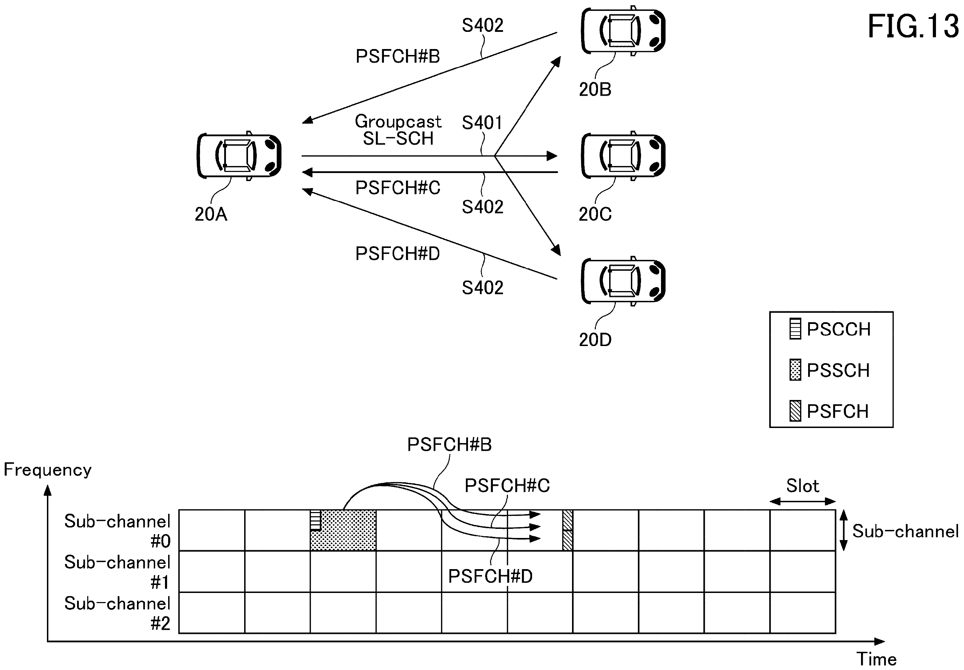

Fig. 13 is a sequence diagram illustrating an example (4) of V2X HARQ-ACK related operation. As described above, it is supported in the NR sidelink that the HARQ response is transmitted via PSFCH. Note that, with respect to the format of PSFCH, the same format as that of PUCCH (Physical Uplink Control Channel) format 0 can be used, for example. That is, the PSFCH format may be a sequence-based format with a PRB (Physical Resource Block) size of 1, ACK and NACK being identified by the difference of sequences or (or, and) cyclic shifts. The format of PSFCH is not limited to the above-described format. PSFCH resources may be located at the last symbol of a slot or a plurality of last symbols of a slot. Further, a period N may be configured or predefined for the PSFCH resource. The period N may be configured or predefined in a unit of slot.

In Fig. 13, the vertical axis corresponds to the frequency domain and the horizontal axis corresponds to the time domain. PSCCH may be arranged at the first (beginning) symbol, may be arranged at a plurality of first symbols of a slot, or may be arranged at a plurality of symbols from a symbol other than the first symbol of a slot. PSFCH resources may be arranged at the last (ending) symbol of a slot, or may be arranged at a plurality of last symbols. Note that the "beginning of a slot" may mean beginning symbols of X symbols that can be used for sidelink from among a plurality of symbols included in a slot, or may mean beginning symbols of the X symbols excluding the first symbol. Similarly, the "ending of a slot" may mean ending symbols of the X symbols, or may mean ending symbols of the X symbols excluding the last symbol. In an example shown in Fig. 13, three sub-channels are configured in a resource pool, and two PSFCHs are arranged in a slot after three slots from a slot in which PSSCH is arranged. Arrows from PSSCH to PSFCH indicate an example of PSFCH associated with PSSCH.

Fig. 13 illustrates an example of groupcast option 2 in which an ACK or NACK is transmitted in a HARQ response in the NR-V2X groupcast. As shown in Fig. 13, in step S401, the terminal 20A, which is the transmitting side terminal 20, performs groupcast with respect to the terminal 20B, the terminal 20C, and the terminal 20D, which are the receiving side terminals 20, via SL-SCH. In the subsequent step S402, the terminal 20B uses PSFCH#B, the terminal 20C uses PSFCH#C, and the terminal 20D uses PSFCH#D to transmit HARQ responses to the terminal 20A. Note that, in groupcast option 1, only NACK is transmitted as a HARQ response, and ACK is not transmitted.

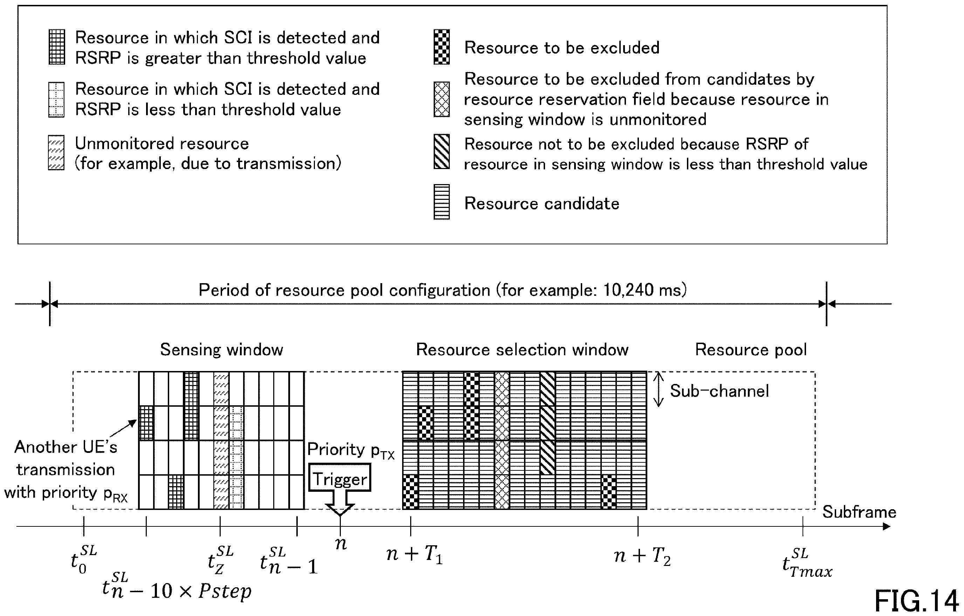

Fig. 14 is a drawing illustrating an example of a sensing operation as an example of a basic operation of a system in an embodiment of the present invention. Here, as an example, an example of a sensing operation in LTE is illustrated. In a case where the partial sensing is not configured by the upper layer in the LTE sidelink, the terminal 20 selects a resource and performs transmission as shown in Fig. 14. As illustrated in Fig. 14, the terminal 20 performs sensing in a sensing window in a resource pool. According to the sensing, the terminal 20 receives the resource reservation field contained in the SCI transmitted from another terminal 20 and identifies the available resource candidates in the resource selection window in the resource pool, based on the field. Subsequently, the terminal 20 randomly selects a resource from the available resource candidates. Sensing the entire resources in the sensing window may be referred to as full sensing.

Further, as shown in Fig. 14, the configuration of the resource pool may have a period. For example, the period may be a period of 10240 milliseconds. Fig. 14 is an example in which subframes from subframe t₀^{SL} to subframe t_{Tmax}^{SL} are configured as a resource pool. The resource pool within the period may have an area configured by, for example, a bitmap.

In addition, as illustrated in Fig. 14, it is assumed that a transmission trigger in the terminal 20 occurs in a sub-frame n and the priority of the transmission is p_{TX}. The terminal 20 can detect, for example, that another terminal 20 is performing transmission with priority p_{RX} in a sensing window from subframe t_{n-10*Pstep}^{SL} to subframe tₙ₋₁^{SL}. In a case where an SCI is detected in the sensing window and the RSRP is greater than a threshold value, the resource in the resource selection window corresponding to the SCI is excluded. In addition, in a case where an SCI is detected in the sensing window and the RSRP is less than the threshold value, the resource in the resource selection window corresponding to the SCI is not excluded. The threshold value may be, for example, a threshold value Th_{pTX}, _{pRX} configured or defined for each resource in the sensing window, based on the priority p_{TX} and the priority p_{RX}.

In addition, a resource in the resource selection window corresponding to a resource in the sensing window that is not monitored due to the transmission, for example, such as the subframe t_{z}^{SL} shown in Fig. 14, is excluded.

In the resource selection window from subframe n+T₁ to subframe n+T₂, as shown in Fig. 14, a resource occupied by another UE is identified, and resources from which the identified resource is excluded become a set of available resource candidates. When the set of available resource candidates is referred to as S_{A}, in a case where the S_{A} is less than 20% of the resource selection window, the resource identification may be performed again by raising the threshold value Th_{pTX}, _{pRX} configured for each resource in the sensing window by 3 dB.

That is, resources, which are not excluded because the RSRP is less than the threshold value, may be increased by raising the threshold value Th_{pTX}, _{pRX} and then by performing the resource identification again. In addition, the RSSI of each resource in the S_{A} may be measured and the resource with the lowest RSSI may be added to the set S_{B}. The operation of adding the resource with the lowest RSSI included in the S_{A} to the S_{B} is repeated until the set S_{B} of resource candidates becomes equal to or greater than 20% of the resource selection window.

The lower layer of the terminal 20 may report the S_{B} to the upper layer. The upper layer of the terminal 20 may perform random selection for the S_{B} to determine a resource to be used. The terminal 20 may perform sidelink transmission using the determined resource. Note that the terminal 20 may use the resource periodically without performing the sensing for a predetermined number of times (e.g., Cᵣₑₛₑₗ times) after the resource is once secured.

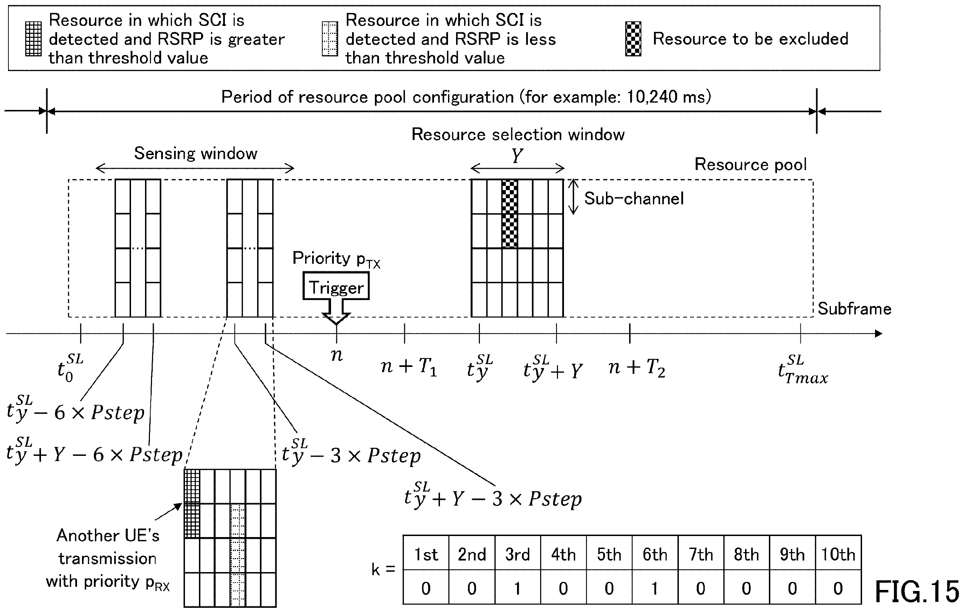

Fig. 15 is a drawing illustrating an example of a partial sensing operation. In a case where the partial sensing is configured by the upper layer in the LTE sidelink, the terminal 20 selects resources and perform transmission as shown in Fig. 15. As illustrated in Fig. 15, the terminal 20 performs partial sensing in a part of a sensing window in a resource pool. According to the partial sensing, the terminal 20 receives the resource reservation field contained in the SCI transmitted from the another terminal 20 and identifies the available resource candidates in the resource selection window in the resource pool, based on the field. Subsequently, the terminal 20 randomly selects a resource from the available resource candidates.

Further, as shown in Fig. 15, the configuration of the resource pool may have a cycle. For example, the cycle may be a period of 10240 milliseconds. Fig. 15 is an example in which subframes from subframe t₀^{SL} to subframe t_{Tmax}^{SL} are configured as a resource pool. The resource pool within the period may have an area configured by, for example, a bitmap.

As illustrated in Fig. 15, a transmission trigger in the terminal 20 occurs in subframe n and the priority of the transmission is p_{TX}. In an example of Fig. 15, from among the subframes from subframe n+T₁ to subframe n+T₂, Y subframes from subframe t_{y}^{SL} to subframe t_{y+y}^{SL} is configured as the resource selection window. Furthermore, as illustrated in Fig. 15, a transmission trigger in the terminal 20 occurs in subframe n and the priority of the transmission is p_{TX}.

The terminal 20 can detect, for example, that another terminal 20 is performing transmission with priority p_{RX} in one or more sensing windows from subframe t_{y-k×Pstep}^{SL} to subframe t_{y+Y-k×Pstep}^{SL}, the length of which being Y subframes. The k may be a 10-bit bitmap, for example. Fig. 15 shows an example in which the third and sixth bits of the bitmap are configured to be "1" indicating that the partial sensing is to be performed. That is, in Fig. 15, subframes from subframe t_{y-6×Pstep}^{SL} to subframe t_{y+Y-6×Pstep}^{SL}, and subframes from subframe t_{y-3×Pstep}^{SL} to subframe t_{y+Y-3×Pstep}^{SL} are configured as the sensing windows. As described above, the i-th bit of the bitmap k may correspond to a sensing window from subframe t_{y-i×Pstep}^{SL} to subframe t_{y+Y-i×Pstep}^{SL}.

In a case where an SCI is detected in one or more sensing windows and the RSRP is greater than a threshold value, the resource in the resource selection window corresponding to the SCI is excluded. In addition, in a case where an SCI is detected in the sensing window and the RSRP is less than the threshold value, the resource in the resource selection window corresponding to the SCI is not excluded. The threshold value may be, for example, a threshold value Th_{pTX}, _{pRX} configured or defined for each resource in the sensing window, based on the priority p_{TX} and the priority p_{RX}.

In a resource selection window in which Y subframes are configured, the terminal 20 identifies a resource occupied by another UE, and the resource excluding the identified resource becomes available resource candidates. When the set of available resource candidates is referred to as S_{A}, in a case where the S_{A} is less than 20% of the resource selection window, the resource identification may be performed again by raising the threshold value Th_{pTX}, _{pRX} configured for each resource in the sensing window by 3 dB. That is, resources, which are not excluded because the RSRP is less than the threshold value, may be increased by raising the threshold value Th_{pTX}, _{pRX} and then by performing the resource identification again. In addition, the RSSI of each resource in the S_{A} may be measured and the resource with the lowest RSSI may be added to the set S_{B}. The operation of adding the resource with the lowest RSSI included in the S_{A} to the S_{B} is repeated until the set S_{B} of resource candidates becomes equal to or greater than 20% of the resource selection window.

The lower layer of the terminal 20 may report the S_{B} to the upper layer. The higher layer of the terminal 20 may perform random selection for the S_{B} to determine a resource to be used. The terminal 20 may perform sidelink transmission using the determined resource. Note that the terminal 20 may use the resource periodically without performing the sensing for a predetermined number of times (e.g., Cᵣₑₛₑₗ times) after the resource is once secured.

An operation of the transmission-side terminal 20 has been described with reference to Fig. 14 and Fig. 15. The reception-side terminal 20 may detect data transmission from another terminal 20, based on a result of sensing or partial sensing and receive data from the another terminal 20.

The resource selection operation in NR (for example, Non-Patent Documents 2 and 3) is basically the same as the resource selection operation in LTE.

That is, TX-UE excludes, from S_{A}, the specific resources detected from all resources (referred to as Mₜₒₜₐₗ, initially, Mₜₒₜₐₗ = S_{A}) in the resource pool in the resource selection window, based on sensing in the sensing window. The specific resources include: resources that are reserved by an SCI received by TX-UE, wherein the RSRP (reception power) with respect to the SCI is greater than the threshold value; resources for which sensing is not performed; and the like.

In a case where the identified resource amount (the resource amount of S_{A}) is less than X% of the entire resource amount in the resource selection window in the resource pool, the above-described process is repeated by increasing the threshold value by 3 dB until the identified resource amount becomes equal to or greater than X%. For example, X may be 20. Note that one resource is, for example, a resource of "one slot * (one or more sub-channels)". In addition, RSRP may be a value measured by DM-RS of a PSCCH resource used for transmitting SCI, or may be a value measured by DM-RS of a PSSCH resource specified (reserved) by SCI.

In TX-UE, the determined S_{A} is reported to the upper layer, and, in the upper layer, a transmission resource is randomly selected from S_{A}. In NR, power saving may be performed based on the above-described partial sensing.

On the other hand, in NR release 16 sidelink, the preemption (pre-emption) check and reevaluation (re-evaluation) function are adopted, and thus, the terminal 20 according to an embodiment of the present invention can perform the preemption check and the reevaluation. Although the preemption check and the reevaluation are functions for the resource allocation mode 2 in which the terminal 20 autonomously selects a resource to be transmitted, the preemption check and the reevaluation may be used in mode 1 in an embodiment of the present invention.

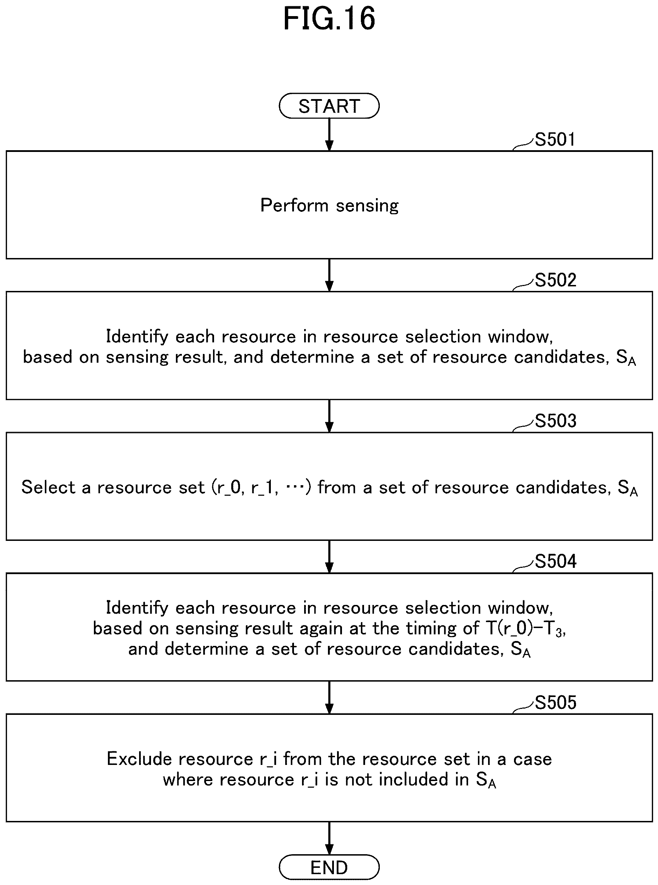

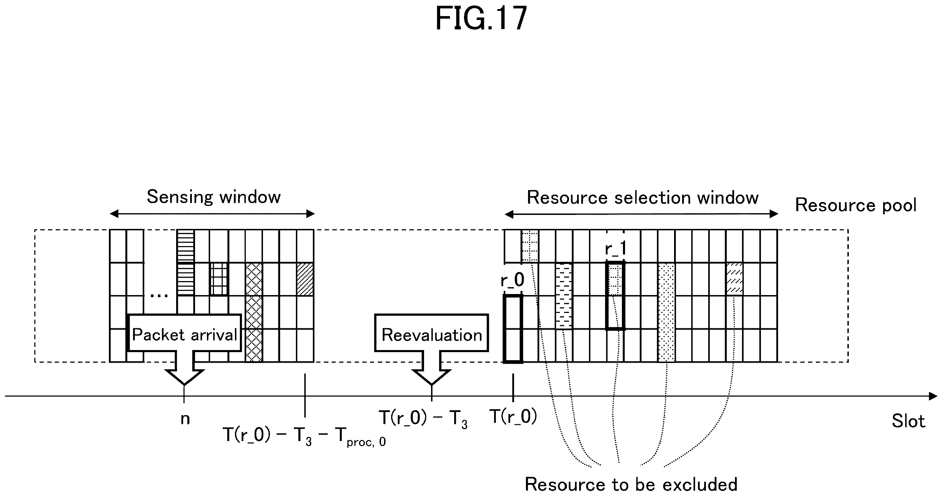

Fig. 16 is a flowchart illustrating an example of reevaluation. Fig. 17 is a drawing illustrating an example of reevaluation. In step S501, the terminal 20 performs sensing in the sensing window. In a case where the terminal 20 performs a power saving operation, the sensing may be performed in a limited period specified in advance. Subsequently, the terminal 20 identifies each resource in the resource selection window, based on the sensing result, and determines a set S_{A} of resource candidates (S502). Subsequently, the terminal 20 selects a resource set (r_0, r_1, ...) from the set S_{A} of resource candidates (S503). This resource set may be resources that are selected in the upper layer and are to be used for transmission.

In step S504, at the timing of T(r_0)-T₃ shown in Fig. 17, the terminal 20 identifies again each resource in the resource selection window, based on the sensing result to determine the set S_{A} of resource candidates. Subsequently, in a case where the resource r_i is not included in S_{A}, the resource set is updated by the terminal 20 by excluding r_i from the resource set (S505), and the reevaluation ends. In the upper layer, a resource is selected from the resource set after the reevaluation.

In an example of reevaluation illustrated in Fig. 17, from among the resource r_0 and the resource r_1, r_1 is excluded from the resource set because r_1 is not included in S_{A} based on the repeated sensing result. Therefore, the terminal 20 performs transmission using the resource r_0.

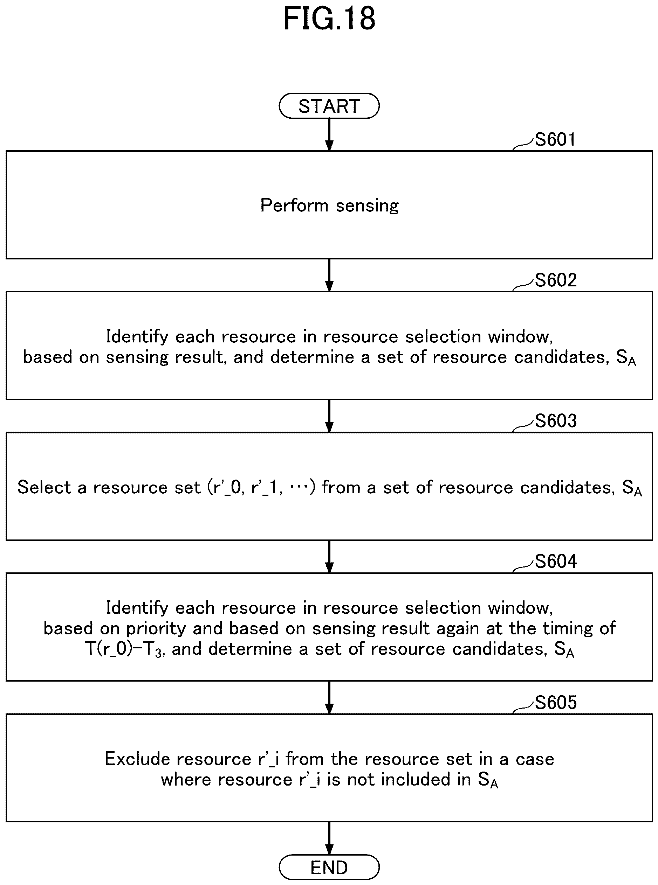

Fig. 18 is a sequence diagram illustrating an example of a preemption check. An operation will be described by replacing "reevaluation" with "preemption check", and replacing "r_0" and "r_1" with "r' _0" and "r'_1", respectively, in Fig. 17. In step S601, the terminal 20 performs sensing in the sensing window. In a case where the terminal 20 performs a power saving operation, the sensing may be performed in a limited period specified in advance. Subsequently, the terminal 20 identifies each resource in the resource selection window, based on the sensing result, and determines a set S_{A} of resource candidates (S602). Subsequently, the terminal 20 selects a resource set (r' _0, r'_1, ...) from the set S_{A} of resource candidates (S603). This resource set may be resources that are selected in the upper layer and are to be used for transmission.

In step S604, at the timing of T(r_0)-T₃ shown in Fig. 17, the terminal 20 identifies again each resource in the resource selection window, based on the sensing result and based on the priority to determine the set S_{A} of resource candidates. For example, r'_1 illustrated in Fig. 17 is included in the set S_{A} according to the sensing again.

In a case where the preemption check is enabled, in a case where the value prio_RX indicating the priority of the SCI transmitted from another terminal 20 is lower than the value prio_TX indicating the priority of the transport block to be transmitted from the terminal 20 itself, the terminal 20 excludes the resource r'_1 from S_{A}. Note that the lower the value indicating the priority, the higher the priority. In other words, in a case where the value prio_RX indicating the priority of the SCI transmitted from another terminal 20 is higher than the value prio_TX indicating the priority of the transport block to be transmitted from the terminal 20 itself, the terminal 20 does not exclude the resource r'_1 from S_{A}.

Hereinafter, with respect to the priority, in a case of describing "high", the priority is high.

In step S605, in a case where the resource r'_i is not included in S_{A}, the resource set S_{A} is updated by the terminal 20 by excluding r'_i from the resource set (S605). In this case, r'_1 is determined to be unavailable based on the upper layer parameter, and prio_TX and prio_RX, and the preemption check ends. The terminal 20 selects a transmission resource from the updated S_{A}.

### (Regarding mode 1)

The technologies described in an embodiment of the present invention are not limited to a specific wireless method such as NR or LTE, and are not limited to a specific mode, and as an example, NR mode 1 (resource allocation mode 1) is assumed to be used together with the above-described mode 2. Here, an overview of mode 1 will be described.

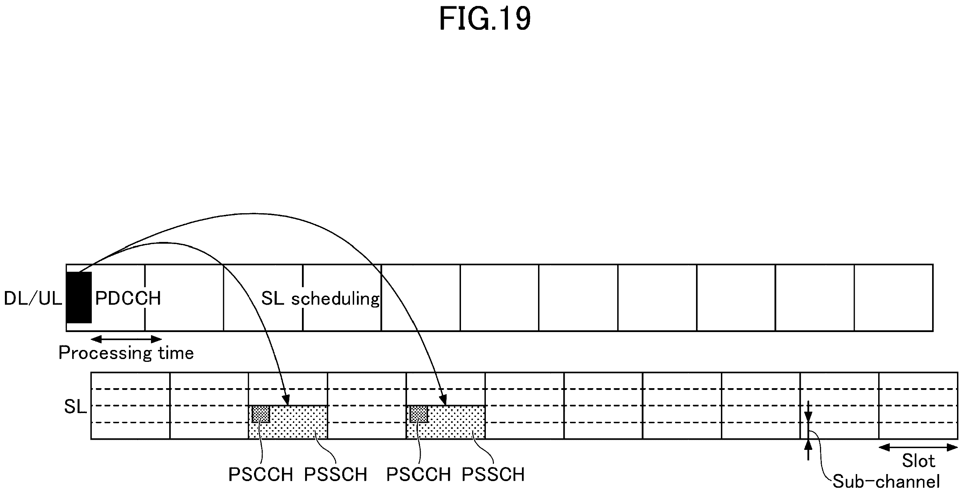

As described with reference to Fig. 2, etc., in mode 1, SL transmission resources are allocated from the base station 10 to the terminal 20. That is, as illustrated in Fig. 19, the SL transmission resource (i.e., PSCCH. PSCCH) is allocated to the terminal 20 according to PDCCH (specifically, DCI) received from the base station 10, and the terminal 20 performs SL transmission using the resource.

More specifically, there are dynamic grant (DG), configured grant (CG) type 1, and CG type 2, in the SL transmission allocation from the base station 10 to the terminal 20. In mode 1, DCI format 3_0 is used for DG and CG type 2. Note that the monitoring occasion of DCI format 3_0 is configured separately from other formats.

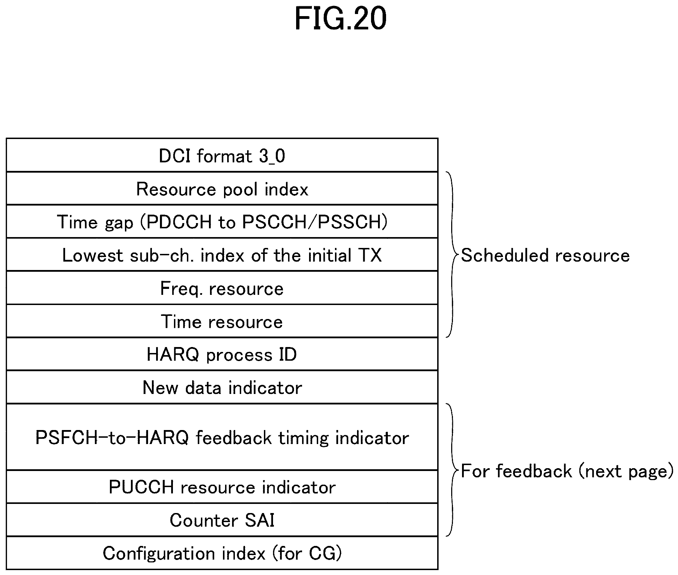

Fig. 20 illustrates an example of fields of DCI format 3_0. As illustrated in Fig. 20, the information indicated by DCI format 3_0 includes: resource information to be scheduled; information related to initial transmission/retransmission; and information related to feedback. With respect to the information related to the initial transmission/retransmission, the transmission-side terminal 20A manages relationship between the HPN (HARQ Process Number) specified by DCI format 3_0 and the HPN in the SCI.

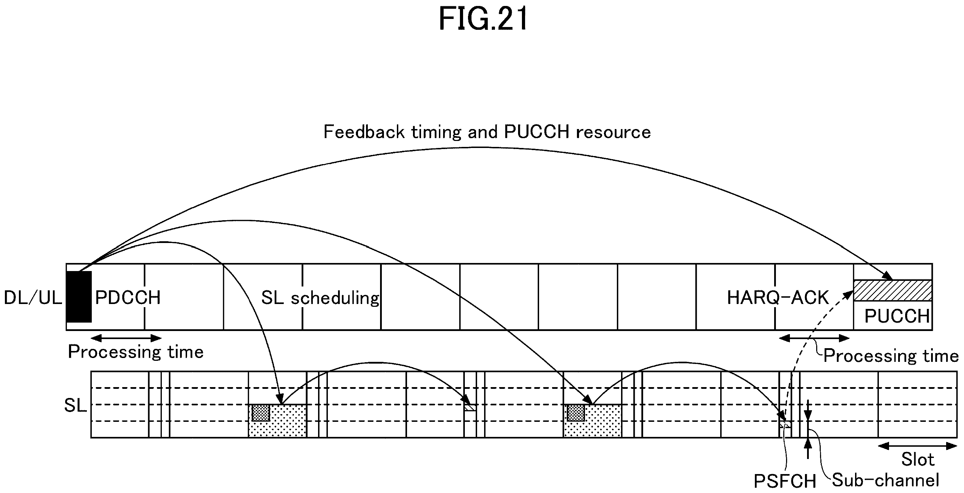

In addition, with respect to the feedback, descriptions have already been made with reference to Fig. 12, etc. Fig. 21 illustrates resources in a case described with reference to Fig. 12. As illustrated in Fig. 21, the HARQ-ACK, which is transmitted as a feedback to the terminal 20A via PSFCH, can be transmitted as a feedback to the base station 10 via PUCCH.

### (Regarding the problem to be solved)

A situation is assumed in which a terminal 20 that operates in NR mode 1 as described above, and a terminal 2 that operates in NR mode 2, coexist. In a case where SL communications in mode 1 are performed under an environment of presence of a terminal 20 that operates in mode 2, an SL transmission may occur that cannot be controlled by the NW (base station 10), and thus, a collision may occur.

Hereinafter, as an example of a specific technique that can solve the above problem, embodiments 1 to 4 will be described. The embodiments 1 to 4 can be freely combined to be performed.

### (Embodiment 1)

### <Basic operation>

An embodiment 1 will be described first. In the embodiment 1, the terminal 20, for which an SL transmission is scheduled by NW, determines: whether the scheduled SL transmission can be performed; or the resource that can be transmitted, based on a signal received from another terminal 20.

That is, the mode 1 terminal 20, for which an SL transmission is scheduled, avoids a signal collision with a mode 2 terminal 20, based on the information obtained from an SL signal received from the mode 2 terminal 20. Basically, in the embodiment 1, the terminal 20, for which an SL transmission is scheduled, avoids a collision by performing the sensing of an SL signal transmitted from the mode 2 terminal 20, wherein the sensing is the same as the mode 2 sensing as described above.

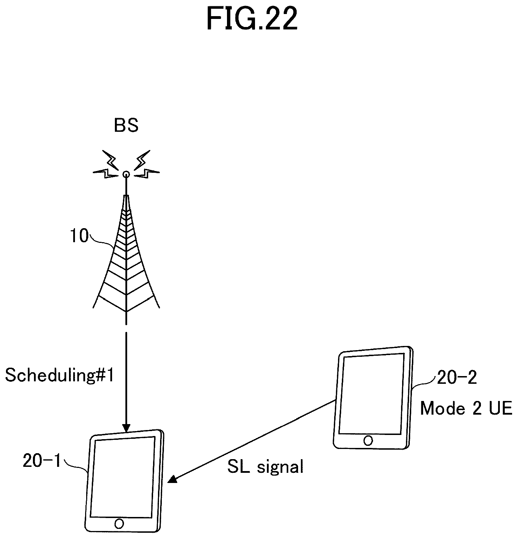

A specific example will be described with reference to Fig. 22 As illustrated in Fig. 22, it is assumed that there are a base station 10, a terminal 20-1 that operates in mode 1, and a terminal 20-2 that operates in mode 2.

An SL transmission is scheduled for the terminal 20-1 according to the scheduling #1 from the base station 10, and the terminal 20-2 transmits an SL signal via an autonomously selected resource. The terminal 20-1 receives the SL signal. The terminal 20-1 determines whether the resource allocated by the scheduling #1 can be used, based on the SL signal received from the terminal 20-2.

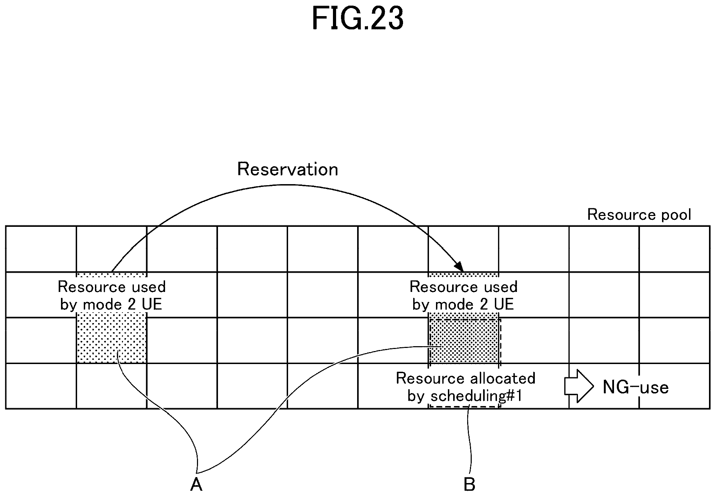

For example, the terminal 20-1 receives an SCI as the SL signal from the terminal 20-2, and determines that the resources indicated by A in Fig. 23 are reserved according to the SCI. On the other hand, the resource indicated by B is allocated as an SL transmission resource for the terminal 20-1 according to the scheduling #1.

In a case where the terminal 20-1 determines that the resource reserved by the terminal 20-2 collides with the resource B that is allocated to the terminal 20-1, the terminal 20-1 determines that the resource B cannot be used, and does not perform an SL signal transmission using the resource B. Accordingly, the SL transmission resource collision (interference) can be avoided.

In the above example, the terminal 20-1 determines whether the resource that is allocated for the terminal 20-1 can be used, based on the information of resource reservation received from the terminal 20-2. This is an example. The terminal 20-1 may determine whether the resource that is allocated for the terminal 20-1 can be used, based on one of or both the information indicated by the time resource assignment field, and the information indicated by the resource reservation period field, in the SCI received from the terminal 20-2.

In addition, the terminal 20-1 may determine whether the resource that is allocated by the base station 10 can be used, based on the reception power of the SL signal received from the terminal 20-2. For example, the terminal 20-1 may determine that the resource cannot be used in a case where: the reception power of a resource received from the terminal 20-2 is equal to or greater than a threshold value; and a part of or all of the resource overlaps with a part of or all of the resource that is allocated by the base station 10.

In addition, when determining whether the resource allocated by the base station 10 can be used, the terminal 20-1 may perform the same operation as the above-described re-evaluation (reevaluation) or the pre-emption (preemption) check by assuming the resource allocated by the base station 10 as the resource selected by the terminal 20-1 itself in mode 2.

### <Operation of selecting a resource to be used>

In the above example, the terminal 20-1 determines whether the resource allocated by the base station 10 can be used, based on the SL signal received from the terminal 20-2 in mode 2. As a more detailed operation, the following operation of selecting a resource to be used may be performed.

In the operation of selecting a resource to be used, as the resources that can be used for SL transmissions, a plurality of resources are allocated from the base station 10 to the terminal 20-1. The terminal 20-1 selects a resource that can be used from among the plurality of resources, based on the SL signal received from the terminal 20-2, and performs SL transmission using the selected resource.

For example, it is assumed that four resources of A, B, C, and D are allocated to the terminal 20-1 from the base station 10, as the resources that can be used for SL transmissions. In a case where the terminal 20-1 determines that the resources A and B are used (including that the resources A and B are reserved) by the terminal 20-2, based on the SL signal received from the terminal 20-2, the terminal 20-1 performs SL transmission using one of or both the resources C and D.

The plurality of resources allocated by the base station 10 may be allocated by a plurality of DCIs, or may be allocated together by one DCI. The plurality of resources that are allocated together may be four or more resources.

In addition, a plurality of resources may be treated as a set, and a set from among a plurality of sets may be indicated from the base station 10 to the terminal 20-1.

For example, in a case where a set 1 including four resources A, B, C, and D is specified from the base station 10 to the terminal 20-1 as a set of resources that can be used, the terminal 20-1 selects a resource to be used from among the resources A, B, C, and D included in the set 1.

In addition, in an operation of selecting a resource to be used in which a plurality of resources are allocated from the base station 10 to the terminal 20-1, as described referring to Fig. 12, the terminal 20-1 may perform feedback to the base station 10. In this case, the terminal 20-1 may determine a resource (for example: a time resource, a frequency resource, or a time and frequency resource) for the feedback, based on a specific (for example: "the last in the time domain" or "the first in the time domain") resource from among the plurality of resources. The resource for the feedback is not required to be based on the resource actually used for SL transmission.

For example, it is assumed that the resources of A, B, C, and D are allocated to the terminal 20-1 as the plurality of resources and an SL transmission is performed using the resource A. In addition, in a case where the last resource in the time domain from among the resources A, B, C, and D is the resource D, for example, the terminal 20-1 transmits a feedback for the SL transmission via the resource A to the base station 10 in a slot after a predefined number of slots from the slot of the resource D.

### <Operation of reporting to the base station>

The terminal 20-1 may transmit a NACK to the base station 10 in a case where the SL transmission using the resource allocated by the base station 10 is not performed based on the reception of a signal from the terminal 20-2, for example.

In addition, in the above-described operation of selecting a resource to be used, the terminal 20-1 may report, to the base station 10, the resource that is not used for SL transmission among the plurality of resources allocated by the base station 10.

### <Effects of embodiment 1>

It is assumed that the terminal 20, which performs an operation of mode 1, also supports an operation of mode 2. In the embodiment 1, there are effects in which the terminal 20 can avoid a collision between terminals of mode 1 and mode 2 while reducing the additional terminal implementations, because the signal collision with the mode 2 terminal 20 is avoided by performing the same operations as the sensing in mode 2, and the re-evaluation (reevaluation), or the pre-emption (preemption) check.

### (Embodiment 2)

Next, an embodiment 2 will be described. The embodiment 2 may be performed without including the embodiment 1, or may be combined with the embodiment 1 to be performed.

In the embodiment 2, the terminal 20 that operates in mode 1 receives a signal from the terminal 20 that operates in mode 2, and reports information based on the signal to the base station 10. Thus, for example, the base station 10 can receive information related to the mode 2 terminal 20 (e.g., resources used for SL transmission) from the mode 1 terminal 20. Accordingly, based on the information, the base station 10 can allocate a resource of SL transmission to the terminal 20 that operates in mode 1 in a way in which the resource does not collide with a resource used by the mode 2 terminal 20, for example.

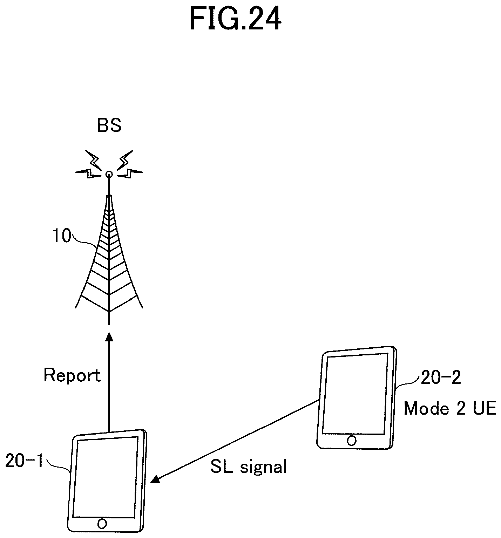

A specific example will be described with reference to Fig. 24 In an example of Fig. 24, there are the base station 10, the terminal 20-1 that performs an operation of mode 1 under the control of the base station 10 and the terminal 20-2 that performs an operation of mode 2.

The mode 2 terminal 20-2 performs SL transmission using the autonomously selected resource. The terminal 20-1 receives the SL signal, and reports information based on the SL signal to the base station 10. The information based on the SL signal may be an SCI received via the SL signal, may be a resource to be used for SL transmission included in the SCI, or may be a resource reserved for SL transmission included in the SCI. In addition, the information based on the SL signal may be information of a resource whose reception power is equal to or greater than a threshold value.

The base station 10, which has received the information based on the SL signal, allocates a resource that is not used by the mode 2 terminal 20-2 to the terminal 20-1 as a resource for SL transmission, for example.

In the above example, the terminal 20-1 reports information based on the SL signal from the mode 2 terminal 20-2 to the base station 10. However, this is an example, the SL signal is not limited to the one received from the mode 2 terminal 20-2 and the terminal 20-1 may transmit information based on an SL signal received from another terminal 20 to the base station 10. Hereinafter, as an example, assuming the situation of Fig. 24, descriptions will be made by assuming that another terminal 20 is the terminal 20-2. In addition, unless otherwise described, the terminal 20-2 described below in the embodiment 2 may be a terminal that is not operating in mode 2.

### <Regarding information transmission method>

In a case where the terminal 20-1 receives an SL signal from the terminal 20-2, the terminal 20-1 may always transmit information based on the SL signal to the base station 10, or may determine whether a predetermined condition is satisfied, and then transmit the information only in a case where the predetermined condition is satisfied. The predetermined condition may be, for example, a condition that the transmission is to be performed at a predetermined time (for example, slot or time window).

As an example, in a case where a UL transmission is to be performed before the time n slots after the time of SL signal reception (e.g., slot k) (that is, before slot k+n), the terminal 20-1 transmits information based on the SL signal at the timing of that UL transmission, for example. "UL transmission is to be performed" means, for example, that the UL transmission is scheduled for the terminal 20-1, or that the UL transmission is to be performed using the resource that is autonomously selected by the terminal 20-1.

In addition, the predetermined condition may be one of (1) or (2) below.

(1) The terminal 20-1 detects that at least a part of the resource allocated by the base station 10 to the terminal 20-1 is reserved by the terminal 20-2.
(2) The terminal 20-1 detects that at least a part of the resource allocated by the base station 10 to the terminal 20-1 is reserved by the terminal 20-2, and that at least one of the priority and RSRP satisfies a second predetermined condition. The second predetermined condition may be a condition that the priority of the terminal 20-2 is higher than the priority of the terminal 20-1. In addition, the second predetermined condition may be a condition that the reception power (RSRP) of the SL signal received from the terminal 20-2 is equal to or greater than a threshold value, for example.

The terminal 20-1 may perform transmission of the information based on the SL signal via a periodic resource, or may perform transmission of the information based on the SL signal using an aperiodic resource that is allocated to the terminal 20-1 by the base station 10.

The signal, which includes the information based on the SL signal and is transmitted by the terminal 20-1, may be transmitted via a data channel, may be transmitted via a control channel, may be transmitted via a feedback channel, or may be transmitted via a dedicated channel other than these channels.

In addition, the signal, which includes the information based on the SL signal and is transmitted by the terminal 20-1, may be a UCI. In a case of using the UCI, the format of the UCI or PUCCH including the UCI may be any format. In addition, a dedicated format of the UCI including the information based on the SL signal or of the PUCCH including the UCI, may be used as the format of the UCI or PUCCH including the UCI.

In addition, the signal, which includes the information based on the SL signal and is transmitted by the terminal 20-1, may be transmitted by the upper layer signaling (e.g., MAC CE or RRC signal).

### <Regarding information based on the SL signal>

The information based on the SL signal transmitted by the terminal 20-1 may be information of a resource that cannot be used by the terminal 20-1, or may be information of a resource that is to be used by the terminal 20-2. That is, the information based on the SL signal transmitted by the terminal 20-1 may be information of a resource at the future time point.

In addition, the information based on the SL signal transmitted by the terminal 20-1 may be information of a resource which the terminal 20-1 has been unable to use due to the collision with a resource of the terminal 20-2, or may be information of a resource that has been used by the terminal 20-2. That is, the information based on the SL signal transmitted by the terminal 20-1 may be information of a resource at the past time point.

The information based on the SL signal transmitted by the terminal 20-1 may be limited to information of the terminal 20 that operates in mode 2 (e.g., information related to a resource that is to be used by or that has been used by, the terminal 20 that operates in mode 2). That is, the terminal 20-1 need not transmit, to the base station 10, information based on the SL signal received from the terminal 20 that does not operate in mode 2 (e.g., the terminal 20 that operates in mode 1).

In order to enable the above operation, the terminal 20 may include, in the SCI to be transmitted by the terminal 20 itself, information indicating whether: the resource usage information or the resource reservation information according to the SCI is information related to mode 1; or the resource usage information or the resource reservation information according to the SCI is information related to mode 2. The terminal 20-1 identifies whether another terminal 20 is operating in mode 2, based on the information received from the another terminal 20, and, in a case where the terminal 20-1 detects that the another terminal 20 is operating in mode 2, the terminal 20-1 reports the information based on the SL signal to the base station 10.

### <Sequence>

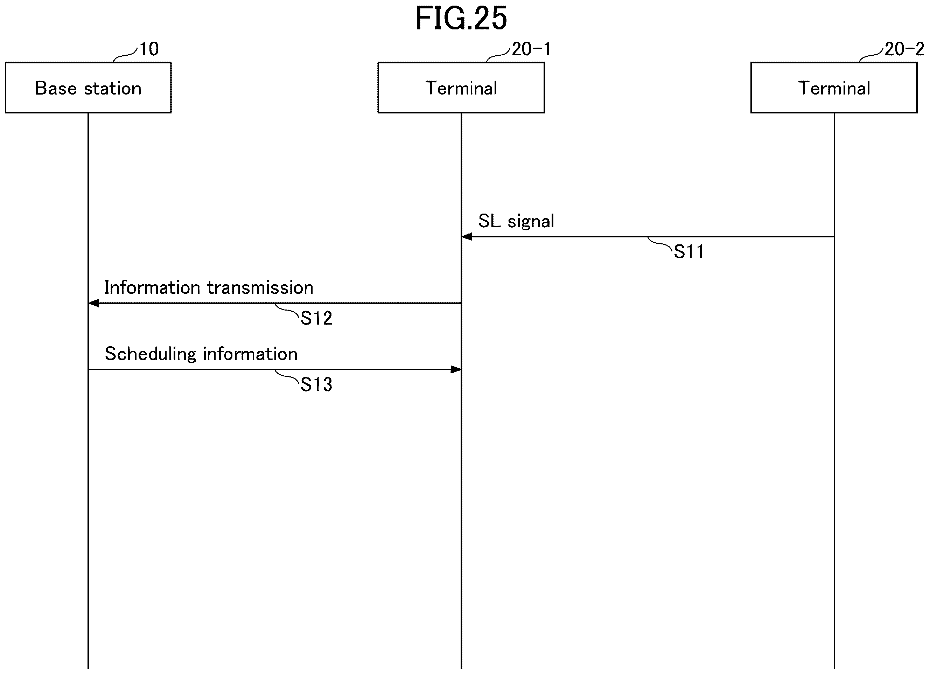

A sequence example will be described with reference to Fig. 25. Here, it is assumed that the terminal 20-1 operates in mode 1, and the terminal 20-2 operates in mode 2. In S11, the terminal 20-1 receives an SL signal from the terminal 20-2. In S12, the terminal 20-1 transmits information based on the SL signal to the base station 10. For example, the base station 10 obtains information of a resource to be used by the terminal 20-2, according to the information based on the SL signal, determines a resource avoiding a collision with the resource, and in S13, transmits allocation information of the determined resource to the terminal 20-1.

In addition, for example, in a case where a resource for SL transmission has already been allocated to the terminal 20-1, and in a case where the base station 10 determines, based on the information based on the SL signal, that a part of or all of the resource to be used by (including reserved by) the terminal 20-2 overlaps with a part of or all of the resource that has already been allocated to the terminal 20-1, the base station 10 may transmit a command of stopping the SL transmission via the resource that has already been allocated to the terminal 20-1. The terminal 20-1, which has received the command, stops the corresponding SL transmission.

### <Effects of embodiment 2>

According to the embodiment 2, the base station 10 can obtain information of a resource usage situation by the mode 2 terminal 20, and, the mode 1 terminal 20, which operates under control of the base station 10, can perform an operation of avoiding the transmission collision, based on the information.

### (Embodiment 3)

Next, an embodiment 3 will be described. The embodiment 3 may be performed without including the embodiments 1 and 2, or may be combined with one of or all of the embodiments 1 and 2 to be performed.

In the embodiment 3, the terminal 20 that operates in mode 2 is connected to the same base station 10 as the base station 10 to which the terminal 20 that operates in mode 1 is connected. Here, a sidelink resource pool, which is used by the terminal 20 that operates in mode 2, may be the same as, or may partially overlap with, a sidelink resource pool, which is used by the terminal 20 that operates in mode 1.

That is, in the embodiment 3, a case is assumed in which the mode 2 terminal 20 is also in-coverage, and the mode 2 terminal 20 operates based on the scheduling information for the mode 1 terminal 20. Thus, the mode 2 terminal 20 can perform an operation of SL transmission in a way in which a collision with the mode 1 terminal 20 is avoided.

Note that, in the embodiment 3, the meaning of "the terminal 20 is connected to the base station 10" includes, other than the connection being established by RRC or the like, "the terminal 20 receives a signal from the base station 10 without establishing the connection by RRC or the like".

In addition, in the embodiment 3, a resource group (e.g., resource pool, CC, serving cell), which can be used only by the mode 1 terminal 20, and the mode 2 terminal 20, which is connected to the same base station 10 as the base station 10 to which the mode 1 terminal 20 is connected, may be configured to these terminals 20 .

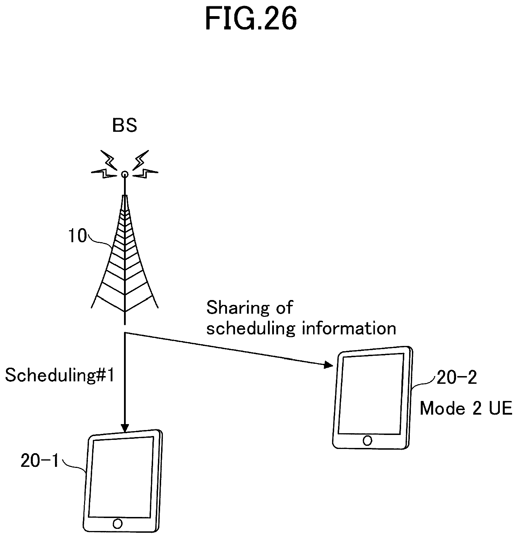

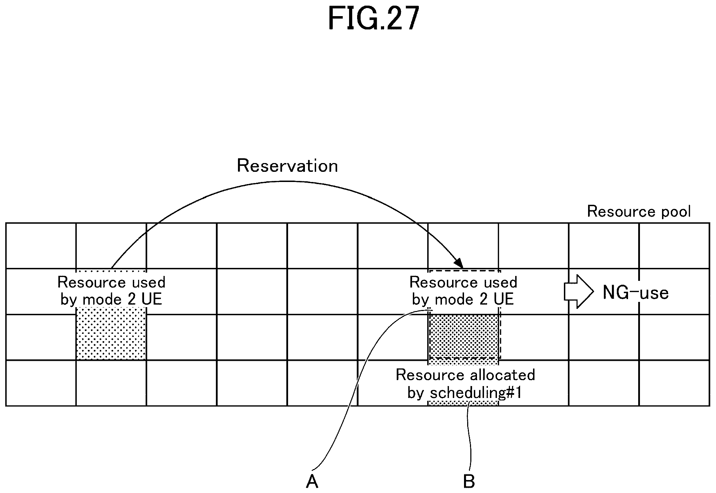

A specific example will be described with reference to Fig. 26 and Fig. 27. In Fig. 26, the mode 1 terminal 20-1 receives resource allocation information (scheduling #1) from the base station 10. In addition, the mode 2 terminal 20-2 also receives the scheduling #1 from the base station 10. That is, the scheduling information can be shared.

Accordingly, for example, as illustrated in Fig. 27, the terminal 20-2 can detect that a part of a resource indicated by A that is selected (reserved) by the terminal 20-2 itself is a resource that is allocated to the mode 1 terminal 20-1. In this case, for example, the terminal 20-2 can determine that the resource indicated by A is to be not used.

Hereinafter, a more specific example will be described from a viewpoint of: a method of connecting to the base station; a scheduling method; a method of receiving scheduling information; transmission control; or the like.

### <Example of a method of connecting to a base station>

Here, similar to the case illustrated in Fig. 26, a case is assumed in which there are the base station 10, the mode 1 terminal 20-1, and the mode 2 terminal 20-2.

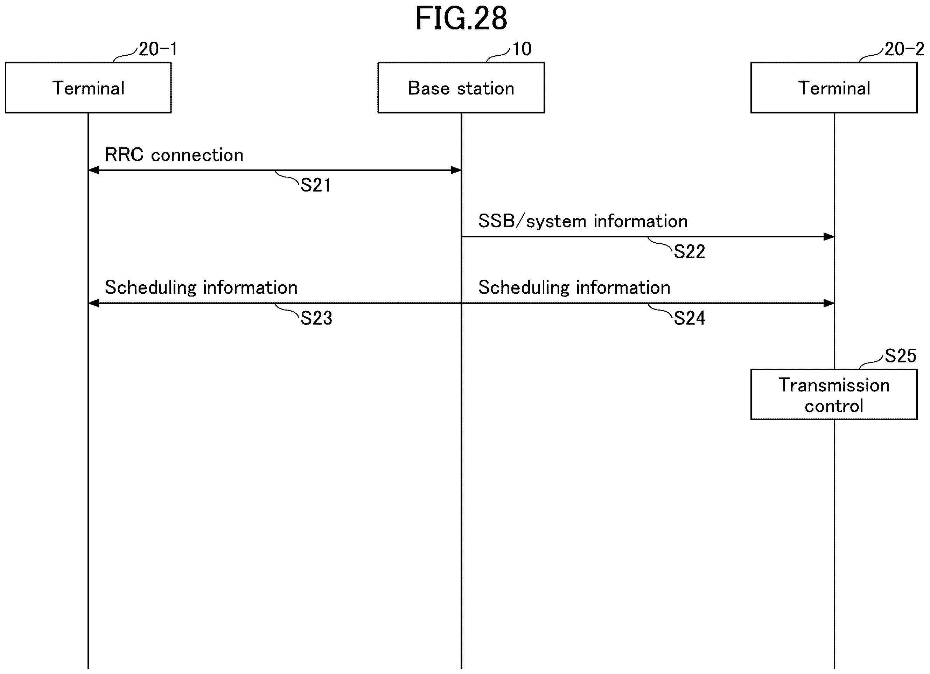

An example of connection method in this case will be described with reference to Fig. 28. In S21, the terminal 20-1 establishes an RRC connection between the terminal 20-1 and the base station 10. On the other hand, the RRC connection establishment is not performed between the terminal 20-2 and the base station 10, and, in S22, the terminal 20-2 receives SSB and system information transmitted from the base station 10. The SSB and system information may include information of a resource for receiving the information (e.g., DCI) transmitted from the base station 10 in S24 described below.

In S23, the terminal 20-1 receives information (scheduling information) of a resource related to the scheduling addressed to the terminal 20-1 itself from the base station 10. The scheduling information may include resource allocation information for the terminal 20 other than the terminal 20-1. In S24, the terminal 20-2 also receives the scheduling information.

In S25, the terminal 20-2 performs transmission control. Specifically, the terminal 20-2 may perform a predetermined operation in a case where a part of or all of the resource that is selected by (including reserved by) the terminal 20-2 itself in an operation of mode 2, overlaps with a part of or all of the resource received in S24 (e.g., the resource allocated to one or more terminals 20).

The predetermined operation performed by the terminal 20-2 is an operation of stopping the SL transmission using the resource selected by the terminal 20-2 itself, for example.

In addition, the predetermined operation performed by the terminal 20-2 may be an operation of performing the SL transmission using the resource selected by the terminal 20-2 itself by increasing the transmission power. In addition, the predetermined operation performed by the terminal 20-2 may be an operation of normally performing the SL transmission using the resource selected by the terminal 20-2 itself.

Which of the above-described operations (stopping transmission, increasing transmission power, and normal transmission) is to be performed may be determined based on at least one of: priority of the selected resource; the order of resource allocation; and whether the reservation of the resource can be performed. As an example, in a case where the type of priority of the selected resource is high, middle, or low, the increasing transmission power may be performed in a case where the priority=high, the normal transmission may be performed in a case where the priority=middle, and the stopping transmission may be performed in a case where the priority=low.

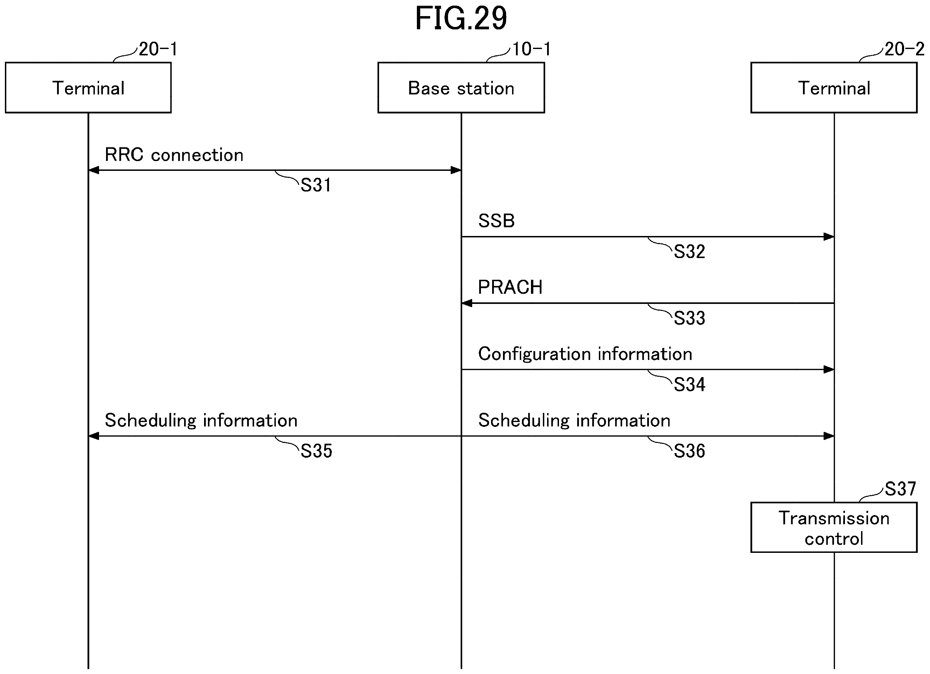

Another example will be described with reference to Fig. 29. In S31, the terminal 20-1 establishes an RRC connection between the terminal 20-1 and the base station 10.

On the other hand, the terminal 20-2 receives SSB from the base station 10 in S32, and performs PRACH transmission in S33. The PRACH resource (e.g., sequence) used for the above-described PRACH transmission may be different from the PRACH resource used for the PRACH transmission for the RRC connection.

After the PRACH transmission, in S34, the terminal 20-2 receives, from the base station 10, configuration information related to PDCCH reception from the base station 10. The configuration information may include one of, plurality of, or all of: monitoring occasion; CORESET; search space; aggregation level; and an RNTI value, for receiving the PDCCH.

In S35, the terminal 20-1 receives information (scheduling information) of a resource related to the scheduling addressed to the terminal 20-1 itself from the base station 10. In S36, the terminal 20-2 also receives the scheduling information. In S37, similar to the above-described S25, the terminal 20-2 performs transmission control.

### <Scheduling method>

In the embodiment 3, the scheduling of a resource for SL transmission (SL resource) for the mode 1 terminal 20 from the base station 10 may be performed by a signal addressed to a single terminal 20 (e.g., UE-specific signal), or may be performed by a signal addressed to multiple terminals 20 (e.g., Group-common signal).

The signal addressed to multiple terminals 20 may include an SL resource allocated to each terminal 20. In addition, the signal addressed to multiple terminals 20 may include information related to feedback to the base station 10 (e.g., PUCCH slot, PUCCH resource, SAI, DAI, or the like). In addition, the signal addressed to multiple terminals 20 may include information of an SL resource allocated to each terminal 20 and information related to feedback to the base station 10.

As described above, in a case where the signal addressed to multiple terminals 20 includes the scheduling information (information of an SL resource, or the like) allocated to each terminal 20, the mode 1 terminal 20 may determine the scheduling information addressed to the terminal 20 itself, based on at least one of the following (1) to (3).

(1) Perform determination according to an RNTI used for scrambling CRC of DCI. For example, the terminal 20 determines that the DCI is addressed to the terminal 20 itself in a case where the DCI is decoded by a specific RNTI.
(2) The terminal 20 determines that the X-th scheduling information from among the N (N>=0) pieces of scheduling information included in a signal addressed to multiple terminals 20, as the scheduling information addressed to the terminal 20 itself. Here, X may be indicated to the terminal 20 from the base station 10 via an upper layer parameter of an RRC signal, MAC CE, or the like.
(3) Perform determination according to UE-ID included in a signal addressed to multiple terminals 20. For example, the terminal 20 determines that the scheduling information of the signal is addressed to the terminal 20 itself in a case where UE-ID of the terminal 20 itself is included in the signal addressed to multiple terminals 20.

In the signal addressed to the multiple terminals 20, a predetermined parameter may be common to the multiple terminals 20. Here, the predetermined parameter is, for example, MCS, time-domain resource, or the like.

In addition, the mode 1 terminal 20 may receive multiple DCIs related to different RNTIs from the base station 10. At this time, the terminal 20 may determine that the scheduling information other than the scheduling information addressed to the terminal 20 itself is scheduling information addressed to another terminal 20, and thus, the scheduling information other than the scheduling information addressed to the terminal 20 itself cannot be used.

For example, the base station 10 transmits multiple DCIs, which should be received by multiple terminals 20 and in which multiple RNTI values are configured. For example, the base station 10 transmits DCI, in which RNTI-A is configured and which should be received by the terminal 20-1, and transmits DCI, in which RNTI-B is configured and which should be received by the terminal 21-1 that is different from the terminal 20-1. Note that, here, an example using multiple RNTIs is illustrated. However, a single RNTI may be configured, and the scheduling information addressed to the terminal 20 itself may be identified by something other than RNTI.

In a case where multiple DCIs related to different RNTIs are received, the mode 2 terminal 20 may determine that all of the received DCIs correspond to the scheduling information addressed to other terminals 20, and cannot be used.

Note that the mode 2 terminal 20 may operate based on the information received from the base station 10 (e.g., resource allocation information for the mode 1 terminal 20) with respect to one of or both of the resource identification and the resource selection.

For example, the mode 2 terminal 20 performs one of or both of the resource identification and the resource selection by excluding the resource indicated by the information received from the base station 10. In addition, the mode 2 terminal 20 may determine whether the resource indicated by the information received from the base station 10 is to be excluded, based on the priority of the resource. For example, the mode 2 terminal 20 may determine that the resource selected by the terminal 20 itself is to be not excluded from the candidates of the SL transmission resource in a case where the priority of the resource selected by the terminal 20 itself is higher than the priority of the resource indicated by the information received from the base station 10.

### <Assumed example of reception>

In both mode 1 and mode 2, the terminal 20 may assume that signals addressed to multiple terminals 20 must be received from the base station 10 via corresponding PDCCH monitoring occasions.

The terminal 20 may determine that, in a case where the signals addressed to multiple terminals 20 are not received via the reception-assumed PDCCH monitoring occasions, the SL transmission is to be not performed via the SL resources corresponding to the occasions. In addition, in a case where the SL resources corresponding to the occasions are selected or reserved, the transmission via the SL resources may be stopped. This is because, in a case where there are SL resource allocation corresponding to the occasions, there is a possibility of a collision with the SL transmission performed via the SL resources, and thus, degradation of reception quality of the SL signals is expected.

In addition, in a case where a predetermined parameter set is indicated from the base station 10 to the mode 1 terminal 20, the indication may mean that the SL resource allocation is to be not performed for the mode 1 terminal 20.

### <Effects of embodiment 3>

According to the embodiment 3, the mode 2 terminal 20 can obtain information indicating an SL allocation situation of the mode 1 terminal 20, and can apply an operation of avoiding the transmission collision, based on the information.

### (Embodiment 4)

Next, an embodiment 4 will be described. The embodiment 4 may be performed without including the embodiments 1 and 3, or may be combined with one of, multiple of, or all of the embodiments 1 and 3 to be performed.

In the embodiment 4, the terminal 20 that operates in mode 2, in an initial transmission of data (e.g., TB (transport block)), or in a transmission of the data using a non-reserved resource, transmits the data using a predetermined resource. Note that, hereinafter, the above-described "initial transmission" and "transmission using a non-reserved resource" are collectively referred to as "transmission A". Note that the transmission A is not limited to the above, and, other than the above, the transmission in general, of which another terminal 20 is unable to obtain an indication in advance, may be referred to as transmission A.

As described above, the non-reserved resource (resource of transmission A) can be distinguished from another resource by using a predetermined resource in the transmission A, by the mode 2 terminal 20, and thus, a collision related to the resource of transmission A between mode 1 and mode 2 can be avoided. Note that, with respect to the reserved resource, by applying the embodiment 1, the reserved resource can be detected by sensing, re-evaluation/pre-emption check, or the like, and thus, the collision can be avoided.

### <Regarding the resources available for transmission A>

The resources that can be used by the mode 2 terminal 20 for transmission A (referred to as the resources available for transmission A) may be specified by a pre-configuration to the terminal 20. The configuration may be performed from the base station 10 to the terminal 20 via RRC signaling, MAC CE, DCI, etc.

Regarding the configured resource, a time resource may be specified as a range of resources that can be used for transmission A. For example, one or more slots in the resource pool for SL transmission or SL reception may be specified.

In addition, regarding the configured resource, a frequency resource may be specified as a range of resources that can be used for transmission A. For example, one or more sub-channels in the resource pool for SL transmission or SL reception may be specified.

Note that, with respect to the transmission other than the transmission A, the mode 2 terminal 20 may use any resource in the resource pool.

### <Regarding selection of resources used for transmission A>

In a case of actually performing the transmission A, the mode 2 terminal 20 uses a resource from among the resources available for transmission A. Specifically, for example, one of the following methods of (1) and (2) can be used.

(1) The mode 2 terminal 20 performs resource identification using the same method as a method for the transmission resources other than the transmission A, and, when selecting the resource for the actual transmission, the mode 2 terminal 20 selects a resource included in the resources available for transmission A , based on the identification results (identified set).
(2) The mode 2 terminal 20 performs resource identification from among the resources available for transmission A, and selects a resource to be used for the actual transmission, based on the identification results (identified set).

### <Regarding an operation of the mode 1 terminal 20>

The mode 1 terminal 20 may assume that, with respect to the initial transmission of data by the terminal 20 itself or with respect to the transmission using a non-reserved resource, a resource other than the predetermined resource for the mode 2 terminal 20 is to be used.

For example, the base station 10 may allocate a resource other than the above-described resources available for transmission A to the mode 1 terminal 20, as a resource for the initial transmission of data, or as a resource for the transmission using a non-reserved resource.

In addition, the mode 1 terminal 20 may perform an operation of the embodiment 1 or the embodiment 2, based on at least the SL signal (resource reservation signal) transmitted from the mode 2 terminal 20 via the above-described predetermined resource.

### <Other examples>

In the embodiment 4, the terminal 20 may transmit only a part of data (TB) or may transmit only reservation information via a non-reserved resource (for example, the above-described "predetermined resource" is an example of the non-reserved resource). In addition, the number of frequency resources may be different between the initial transmission and the retransmission.

### <Specific example>

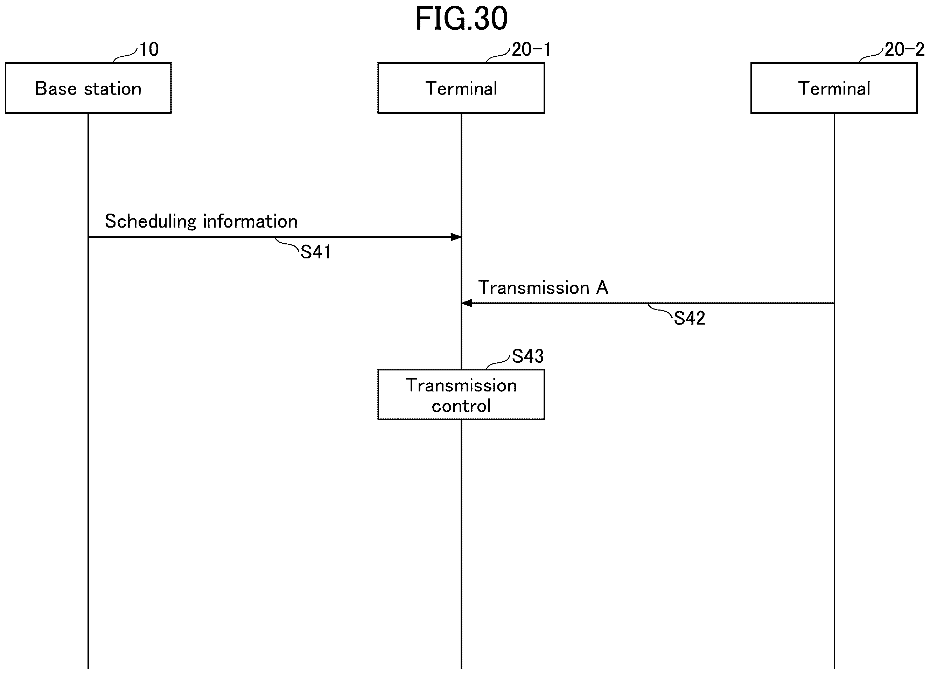

A sequence example will be described with reference to Fig. 30. In Fig. 30, there are the base station 10, the mode 1 terminal 20-1, and the mode 2 terminal 20-2.

In S41, the base station 10 allocates a resource for an initial SL transmission to the terminal 10-1. The resource is, for example, a resource other than the resources available for transmission A. Accordingly, a collision can be avoided between the initial SL transmission to be transmitted by the terminal 20-1 and the transmission A by another terminal 20.

Here, in S42, the terminal 20-1 receives an SL signal according to transmission A from the terminal 20-2. For example, the SL signal according to the transmission A includes reservation information by the terminal 20-2, and thus, the subsequent transmission control of the SL transmission (S43) can be performed using the same operation as the embodiment 1.

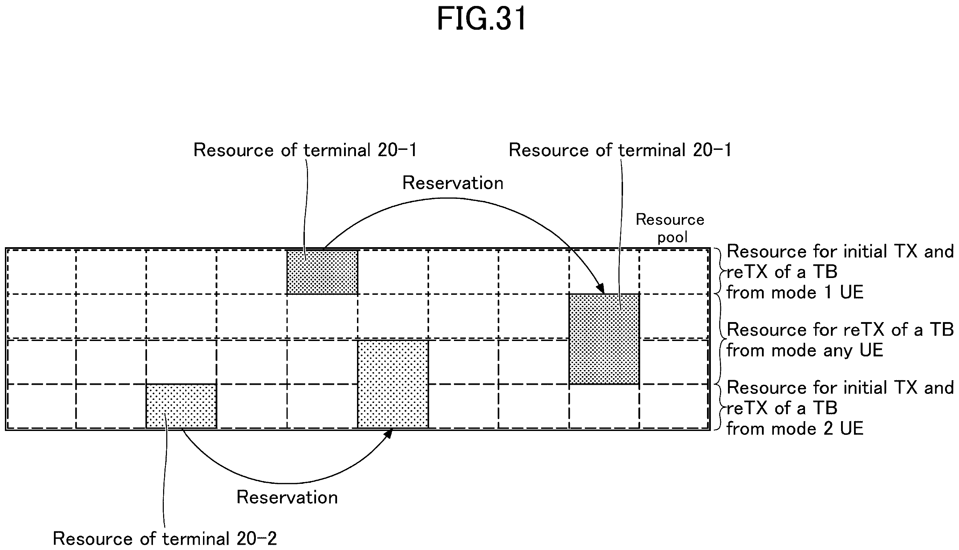

Another example will be described with reference to Fig. 31. In an example of Fig. 31, similarly to the case illustrated in Fig. 29, a case is assumed in which there are the base station 10, the mode 1 terminal 20-1, and the mode 2 terminal 20-2.

As shown by "Resource for initial TX and reTX of a TB from mode 1 UE" in Fig. 31, the upper side part of the resource pool is configured as resources for the initial transmission and retransmission of data for the mode 1 terminal 20-1. In addition, as shown by "Resource for reTX of a TB from any UE", the center part of the resource pool is configured as resources for retransmission of any terminal. In addition, as shown by "Resource for initial TX and reTX of a TB from mode 2 UE", the lower side part of the resource pool is configured as resources for the initial transmission and retransmission of data for the mode 2 terminal 20-2.

Under the configuration as described above, as illustrated in Fig. 31, each terminal 20 can avoid a resource collision to perform initial transmission of SL transmission and the subsequent SL transmission based on the reservation.

### <Effects of embodiment 4>

According to the embodiment 4, avoiding a collision between the mode 1 terminal 20 and the mode 2 terminal 20 can be implemented. In addition, in the embodiment 4, additional implementation can be limited.

### <Other examples>

In any one of the embodiments 1 to 4, the mode 1 is a mode in which the NW (the base station 10) schedules SL resources for the terminal 20, and the mode 2 is a mode in which the terminal 20 autonomously performs resource selection. Note that the mode in which the NW (the base station 10) schedules SL resources for the terminal 20 may be referred to as a name other than mode 1, and the mode in which the terminal 20 autonomously performs resource selection may be referred to as a name other than mode 2.

With respect to any one of the embodiments 1 to 4, the embodiments 1 to 4 may be performed by replacing the base station 10 with a terminal 20 that is different from the terminals 20 under the control of the base station 10. That is, with respect to any one of the embodiments 1 to 4, the technique of the embodiments may be applied to an operation in which one terminal 20 configures (or allocates) a transmission resource of the other terminal 20.

With respect to any one of the embodiments 1 to 4, the terminal 20 may be any terminal, may be a V2X terminal, or may be a terminal performing D2D other the V2X terminal.

In addition, with respect to any one of the embodiments 1 to 4,, operations may be performed only in a specific resource pool. For example, with respect to any one of the embodiments 1 to 4, operations may be performed only in a resource pool that is available for terminals 20 of Rel-17 or later.

### (Apparatus configuration)

Next, a functional configuration example of the base station 10 and the terminal 20 for performing the processes and operations described above will be described. The base station 10 and the terminal 20 include functions for implementing the embodiments 1 to 4 described above. Note that each of the base stations 10 and the terminal 20 may include only functions of one of the embodiments 1 to 4.

### <Base station 10>

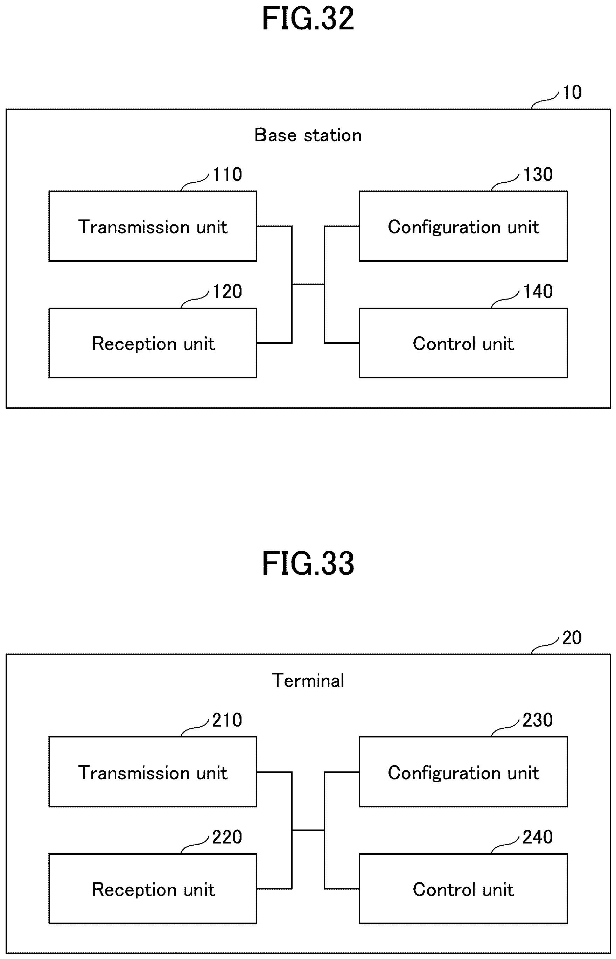

Fig. 32 is a diagram illustrating an example of a functional configuration of the base station 10. As shown in Fig. 32, the base station 10 includes a transmission unit 110, a reception unit 120, a configuration unit 130, and a control unit 140. The functional structure illustrated in Fig. 32 is merely an example. Functional divisions and names of functional units may be anything as long as operations according to an embodiment of the present invention can be performed. The transmission unit 110 and the reception unit 120 may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function of transmitting NR-PSS, NR-SSS, NR-PBCH, DL/UL control signals, the DL data, and the like, to the terminal 20.

The configuration unit 130 stores preset configuration information and various configuration information items to be transmitted to the terminal 20 in a storage apparatus and reads the preset configuration information from the storage apparatus if necessary. The configuration information is read from the configuration unit 130 to be transmitted to the terminal 20 by the transmission unit 110.

The control unit 140 performs, for example, resource allocation and control of the entire base station 10. Note the functional unit related to signal transmission in the control unit 140 may be included in the transmission unit 110, and the functional unit related to signal reception in the control unit 140 may be included in the reception unit 120. Further, the transmission unit 110 and the reception unit 120 may be referred to as a transmitter and a receiver, respectively.

### <Terminal 20>

Fig. 33 is a diagram illustrating an example of a functional configuration of the terminal 20. As shown in FIG. 33, the terminal 20 includes a transmission unit 210, a reception unit 220, a configuration unit 230, and a control unit 240. The functional structure illustrated in Fig. 33 is merely an example. Functional divisions and names of functional units may be anything as long as operations according to an embodiment of the present invention can be performed. The transmission unit 210 and the reception unit 220 may be referred to as a communication unit.

The transmission unit 210 generates a transmission signal from transmission data and transmits the transmission signal wirelessly. The reception unit 220 receives various signals wirelessly and obtains upper layer signals from the received physical layer signals.

The configuration unit 230 stores, in a storage device, various configuration information items received from the base station 10 via the reception unit 220, and reads them from the storage device if necessary. In addition, the configuration unit 230 stores pre-configured configuration information. The control unit 240 performs control of, for example, determining whether the SL transmission using the allocated resource can be performed.

Note the functional unit related to signal transmission in the control unit 240 may be included in the transmission unit 210, and the functional unit related to signal reception in the control unit 240 may be included in the reception unit 220. Further, the transmission unit 210 and the reception unit 220 may be referred to as a transmitter and a receiver, respectively.

According to an embodiment of the present invention, for example, at least a terminal, a base station, and a transmission method as described in each of the following items are provided. Hereinafter, the items are described for each related embodiment.

### <Embodiment 1, Embodiment 4>

### (1st item)

A terminal including: a reception unit configured to receive resource allocation information of a sidelink transmission from a base station;
a control unit configured to determine whether to perform the sidelink transmission using a resource allocated by the base station, based on a sidelink signal received from a terminal that autonomously selects a resource; and
a transmission unit configured to perform the sidelink transmission using the resource in a case where the sidelink transmission using the resource is determined to be performed.

### (2nd item)

The terminal as described in the first item, wherein a plurality of resources for a sidelink transmission are allocated to the terminal, and
the control unit selects an available resource from among the plurality of resources.

### (3rd item)

The terminal as described in the 2nd item, wherein the control unit determines a resource for feedback to be transmitted to the base station, based on a specific resource from among the plurality of resources.

### (4th item)

The terminal as described in the 1st item or the 2nd item, wherein the sidelink signal transmitted by the terminal that autonomously selects a resource is transmitted via a resource selected from among resources of a pre-configured range, in a transmission of data via a non-reserved resource.

### (5th item)

The terminal as described in the 4th item, wherein the transmission unit performs the sidelink transmission using a resource other than the resources of the pre-configured range, in the transmission of data via the non-reserved resource.

### (6th item)

A transmission method performed by a terminal, the transmission method includes:
receiving resource allocation information of a sidelink transmission from a base station;
determining whether to perform the sidelink transmission using a resource allocated by the base station, based on a sidelink signal received from a terminal that autonomously selects a resource; and
performing the sidelink transmission using the resource in a case where the sidelink transmission using the resource is determined to be performed.

According to any one of the 1st to 6th items, a technique is provided that makes it possible to avoid a collision of sidelink transmissions between: a terminal that performs sidelink transmission using a resource allocated by a base station; and a terminal that autonomously selects a resource to perform sidelink transmission. Specifically, according to the 2nd item, a resource can be selected from among the plurality of resources, and thus, flexible control can be performed. According to the 3rd item, a resource for feedback (e.g., timing) can be clarified. According to the 4th item, a collision can be avoided even in a case where transmission is performed via a non-reserved resource. According to the 5th item, a collision can be avoided even in a case where transmission is performed via a non-reserved resource.

### (Embodiment 2)

### (1st item)

A terminal including: a reception unit configured to receive a sidelink signal from a terminal that autonomously selects a resource; and
a transmission unit configured to transmit information based on the sidelink signal to a base station.

### (2nd item)

The terminal as described in the 1st item, wherein the terminal includes a control unit configured to determine whether the information based on the sidelink signal is to be transmitted to the base station, by comparing resource allocation information of a sidelink transmission received from the base station with information of a resource that is to be used by the terminal that autonomously selects a resource.

### (3rd item)

The terminal as described in the 1st item or the 2nd item, wherein the transmission unit transmits, to the base station, information of a resource that is unable to be used at a future time point or information of a resource that was unable to be used at a past time point, as the information based on the sidelink signal.

### (4th item)

A base station including: a reception unit configured to receive, from a second terminal via uplink, information based on a sidelink signal transmitted from a first terminal that autonomously selects a resource; and
a control unit configured to perform scheduling of a sidelink transmission for the second terminal, based on the information based on the sidelink signal.

### (5th item)

The base station as described in the 4th item, wherein the base station includes a transmission unit configured to transmit a command of stopping the sidelink transmission to the second terminal, based on the resource allocated to the second terminal and the information based on the sidelink signal.

### (6th item)

A transmission method performed by a terminal including: receiving a sidelink signal from a terminal that autonomously selects a resource; and
transmitting information based on the sidelink signal to a base station.

According to any one of the 1st to 6th items, a technique is provided that makes it possible to avoid a collision of sidelink transmissions between: a terminal that performs sidelink transmission using a resource allocated by a base station; and a terminal that autonomously selects a resource to perform sidelink transmission. In particular, according to the 2nd item, information necessary for the control by the base station alone can be transmitted. According to the 3rd item, the control based on the resource information at the future time point or the past time point can be performed. According to the 5th item, an SL transmission that will be interference can be stopped.

### (Embodiment 3)

### (1st item)

A terminal including: a reception unit configured to receive resource allocation information of a sidelink transmission from a base station;
a control unit configured to determine whether to perform the sidelink transmission using an autonomously selected resource, based on the resource allocation information; and
a transmission unit configured to perform the sidelink transmission in a case where the sidelink transmission is determined to be performed.

### (2nd item)

The terminal as described in the 1st item, wherein, after PRACH transmission to the base station is performed by the transmission unit, the reception unit receives configuration information for receiving the resource allocation information from the base station.

### (3rd item)

The terminal as described in the 1st item or the 2nd item, wherein the control unit performs an operation of autonomously selecting a resource by excluding a resource indicated by the resource allocation information from candidates.

### (4th item)

The terminal as described in any one item from the 1st item to the 3rd item, wherein the reception unit expects to receive a signal addressed to multiple terminals in each PDCCH monitoring occasion from the base station, and, in a case where the signal addressed to the multiple terminals is not received in a PDCCH monitoring occasion, the transmission unit does not perform the sidelink transmission via a resource corresponding to the PDCCH monitoring occasion.

### (5th item)

A transmission method performed by a terminal, the transmission method includes: receiving resource allocation information of a sidelink transmission from a base station;
determining whether to perform the sidelink transmission using an autonomously selected resource, based on the resource allocation information; and
performing the sidelink transmission in a case where the sidelink transmission is determined to be performed.

According to any one of the 1st item to the 5th item, a technique is provided that makes it possible to avoid a collision of sidelink transmissions between: a terminal that performs sidelink transmission using a resource allocated by a base station; and a terminal that autonomously selects a resource to perform sidelink transmission. In particular, according to the 2nd item, configuration information can be received from a base station without establishing RRC connection. According to the 3rd item, an operation of autonomously selecting a resource can be efficiently performed. According to the 4th item, for example, SL transmission can be performed in a situation of good radio quality.

### (Hardware structure)

In the above functional structure diagrams used for describing an embodiment of the present invention (Fig. 32 and Fig. 33), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming, broadcasting, notifying, communicating, forwarding, configuring, reconfiguring, allocating, mapping, and assigning, etc. For example, a functional block (component) that functions to perform transmission is called a transmitting unit or a transmitter. In either case, as described above, the implementation method is not particularly limited.

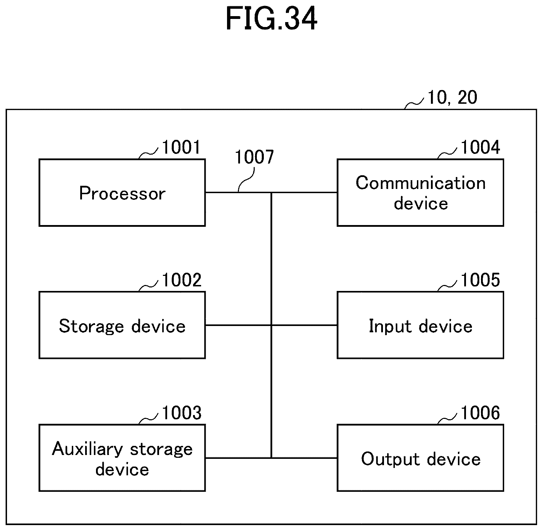

For example, the base station 10, terminal 20, etc., according to an embodiment of the present disclosure may function as a computer for processing the radio communication method of the present disclosure. Fig. 34 is a drawing illustrating an example of hardware structures of the base station 10 and terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the base station 10 and terminal 20 may include one or more of each of the devices illustrated in the figure, or may not include some devices.

Each function in the base station 10 and terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 32 may be realized by control programs that are stored in the storage device 1002 and are executed by the processor 1001. Further, for example, the control unit 240 of the terminal 20 illustrated in Fig. 33 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc R O M), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The auxiliary storage device 1003 may be referred to as an auxiliary storage apparatus. The above recording medium may be a database including the storage device 1002 and/or the auxiliary storage device 1003, a server, or any other appropriate medium.

The communication device 1004 is hardware (transmission and reception device) for communicating with computers via at least one of a wired network and a wireless network, and may be referred to as a network device, a network controller, a network card, a communication module, etc. The communication device 1004 may include a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and the terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be implemented by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUSCH, PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication apparatus, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

Further, the base station in the present disclosure may be read as the terminal. For example, each aspect/embodiment of the present disclosure may be applied to a configuration in which communications between the base station and the terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Similarly, the terminal in the present disclosure may be read as the base station. In this case, the function of the terminal described above may be provided by the base station.

The term "determining" used in the present specification may include various actions or operations. The "determining" may include, for example, a case in which "judging", "calculating", "computing", "processing", "deriving", "investigating", "looking up" (looking up, search, inquiry) (e.g., looking up a table, database, or other data structures), or "ascertaining" is deemed as "determining". Further, the "determining" may include a case in which "receiving" (e.g., receiving information), "transmitting" (e.g., transmitting information), "inputting", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "base on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts," "circuits," "devices," etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission and reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional T T I), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in a RB may be the same, regardless of the numerology, and may be 12, for example. The number of subcarriers included in a RB may be determined on the basis of numerology.

Further, the time domain of a RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a UE, one or more BWPs may be configured in one carrier.

At least one of the configured BWPs may be activated, and the UE may assume that the UE will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in a RB, the number of symbols in a TTI, the symbol length, the cyclic prefix (CP) length, and the like, may be changed in various ways.

In the present disclosure, in a case where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

It is noted that the SS block or CSI-RS in the present disclosure is an example of a synchronization signal or reference signal.

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### [DESCRIPTION OF THE REFERENCE NUMERALS]

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Storage device
1003 Auxiliary storage device
1004 Communication device
1005 Input device
1006 Output device

## Claims

1. A terminal comprising:
a reception unit configured to receive resource allocation information of a sidelink transmission from a base station;
a control unit configured to determine whether to perform the sidelink transmission using an autonomously selected resource, based on the resource allocation information; and
a transmission unit configured to perform the sidelink transmission in a case where the sidelink transmission is determined to be performed.

2. The terminal as claimed in claim 1, wherein, after PRACH transmission to the base station is performed by the transmission unit, the reception unit receives configuration information for receiving the resource allocation information from the base station.

3. The terminal as claimed in claim 1 or 2, wherein the control unit performs an operation of autonomously selecting a resource by excluding a resource indicated by the resource allocation information from candidates.

4. The terminal as claimed in any one of claims 1 to 3, wherein the reception unit expects to receive a signal addressed to multiple terminals in each PDCCH monitoring occasion from the base station, and, in a case where the signal addressed to the multiple terminals is not received in a PDCCH monitoring occasion, the transmission unit does not perform the sidelink transmission via a resource corresponding to the PDCCH monitoring occasion.

5. A transmission method performed by a terminal, the transmission method includes: receiving resource allocation information of a sidelink transmission from a base station;
determining whether to perform the sidelink transmission using an autonomously selected resource, based on the resource allocation information; and
performing the sidelink transmission in a case where the sidelink transmission is determined to be performed.
